# EUROPEAN PATENT APPLICATION

(11) **EP 4 510 523 A1**
(43) Date of publication of application: **19.02.2025**
(21) Application number: 23799202.9
(22) Date of filing: 26.04.2023
(51) Int. Cl.: H04L 45/00

(54) **PACKET PROCESSING METHOD AND RELATED DEVICE**

(30) Priority: 06.05.2022 CN 202210484832; 18.05.2022 CN 202210542978
(71) Applicant: Huawei Technologies Co., Ltd., Shenzhen, Guangdong 518129 (CN)
(72) Inventor: ZHANG, Ka, Shenzhen, Guangdong 518129 (CN); HU, Zhibo, Shenzhen, Guangdong 518129 (CN); LI, Cheng, Shenzhen, Guangdong 518129 (CN); LI, Chenxi, Shenzhen, Guangdong 518129 (CN)
(74) Representative: Goddar, Heinz J.
(86) International application number: PCT/CN2023/090874
(87) International publication number: WO 2023/213216

(57) **Abstract**

This application provides a packet processing method and a related device. An SR policy on a network device includes a segment list, endpoint information, and indication information, and the indication information indicates whether the segment list points to an endpoint indicated by the endpoint information in the SR policy. When receiving a service packet whose destination address matches the SR policy, the network device determines, based on the indication information in the SR policy, whether the segment list points to the endpoint of the SR policy, encapsulates the service packet based on a determining result, and forwards an encapsulated service packet according to an SR path determined based on the segment list. It can be learned that the indication information is added to the SR policy, so that a headend of the SR policy can sense, based on the indication information, whether the segment list points to the endpoint of the SR policy, to perform corresponding processing and forwarding on the service packet based on the result indicated by the indication information. This can ensure that the service packet reaches the endpoint of the SR policy.

## Description

This application claims priorities to Chinese Patent Application No. 202210484832.X, filed with the China National Intellectual Property Administration on May 6, 2022 and entitled "SR POLICY IMPLEMENTATION METHOD, DEVICE, AND SYSTEM", and to Chinese Patent Application No. 202210542978.5, filed with the China National Intellectual Property Administration on May 18, 2022 and entitled "PACKET PROCESSING METHOD AND RELATED DEVICE", both of which are incorporated herein by reference in their entireties.

### TECHNICAL FIELD

This application relates to the field of communication technologies, and in particular, to a packet processing method and a related device.

### BACKGROUND

A segment routing (Segment Routing, SR) policy (policy) is a traffic diversion policy, and the SR policy usually includes a color (color), an endpoint (Endpoint), and a segment list (segment list). If a destination address of a service packet matches the SR policy, the service packet may be forwarded according to an SR path determined based on the segment list in the SR policy.

However, in some application scenarios, the SR path determined based on the segment list may not match a forwarding path of the service packet. Therefore, if the service packet is forwarded according to the SR path determined based on the segment list, the service packet may fail to be effectively transmitted.

### SUMMARY

Based on this, this application provides a packet processing method and a related device, to indicate, in an SR policy, whether a segment list points to an endpoint of the SR policy, so that a headend of an SR tunnel can appropriately encapsulate and forward a service packet based on the indication. This ensures that the service packet reaches the endpoint of the SR policy.

According to a first aspect, this application provides a packet processing method. In the method, a first network device stores an SR policy, the SR policy includes a first segment list, endpoint information, and first indication information, and the first indication information indicates whether the first segment list points to an endpoint indicated by the endpoint information in the SR policy. When receiving a first service packet whose destination address matches the SR policy, the first network device can determine, based on the first indication information in the SR policy, whether the first segment list points to the endpoint of the SR policy, and encapsulate the first service packet based on a result of whether the first segment list points to the endpoint of the SR policy, to obtain the second service packet; and then, the first network device forwards the second service packet according to an SR path determined based on the first segment list. It can be learned that, in the method, the indication information indicating whether the segment list points to the endpoint of the SR policy is added to the SR policy, so that a headend of the SR policy can sense, based on the indication information, whether the segment list points to the endpoint of the SR policy, and perform corresponding processing and forwarding on the service packet based on the result indicated by the indication information. Regardless of whether the SR path determined based on the segment list in the SR policy matches a forwarding path of the service packet, this can ensure that the service packet reaches the endpoint of the SR policy, and improve a success rate of forwarding the service packet.

In embodiments of this application, the SR policy may be a segment routing on internet protocol version 6 policy (Segment Routing on IPv6 policy, SRv6 policy), and a SID in the first segment list is an IPv6 address; or the SR policy may be a segment routing on multi-protocol label switching policy (Segment Routing on Multi-Protocol Label Switching policy, SR MPLS policy), and a SID in the first segment list is an MPLS label.

In some implementations, that the result indicates that the first segment list points to the endpoint of the SR policy includes: A last segment identifier SID in the first segment list points to the endpoint.

In an example, that a last first SID in the first segment list points to the endpoint includes: The last SID in the first segment list is a first endpoint SID, and the first endpoint SID indicates the endpoint. For example, the first endpoint SID may be an end SID of the endpoint of the SR policy.

In another example, that a last first SID in the first segment list points to the endpoint includes: The last SID in the first segment list is a second endpoint SID, and the second endpoint SID indicates an outbound interface that is on a previous-hop node of the endpoint and that points to the endpoint. For example, the second endpoint SID may be an end.X SID of a previous-hop node of the endpoint of the SR policy.

When the first segment list points to the endpoint of the SR policy, for example, that the first network device encapsulates the first service packet, to obtain a second service packet may include: The first network device compresses the first segment list to obtain a compressed list and a network segment address, where the compressed list includes a plurality of compressed SIDs; the first network device obtains a second segment list, where the second segment list includes the compressed list and function information in a service SID, the service SID indicates a service stream to the endpoint, and the service SID further includes the network segment address; and the first network device encapsulates the network segment address and the second segment list in the first service packet, to obtain the second service packet. SIDs in the first segment list all include the network segment address. The compressed list is a list formed according to a sequence of SIDs in the first segment list after the SIDs including the segment address are removed from the SIDs in the first segment list. The service SID also includes the network segment address. The second segment list may be a segment list obtained by adding the function information in the service SID at the end of the compressed list.

The service SID may be a virtual private network (Virtual Private Network, VPN) SID or a service chain (Service Chain) SID of the endpoint.

The second service packet may carry the second segment list in a segment routing header (Segment Routing Header, SRH); or the second service packet may carry the second segment list in an internet protocol version 6 IPv6 header. For example, the second service packet may carry the second segment list in a destination address field of the IPv6 header.

In some other implementations, that the result indicates that the first segment list does not point to the endpoint of the SR policy includes: A last segment identifier SID in the first segment list does not point to the endpoint.

In an example, that a last first SID in the first segment list does not point to the endpoint includes: The last SID in the first segment list is a third endpoint SID, the third endpoint SID indicates a previous N-hop node of the endpoint, and N is an integer greater than or equal to 1. For example, the third endpoint SID may be an end SID of a previous N-hop node of the SR policy.

In another example, that a last first SID in the first segment list does not point to the endpoint includes: The last SID in the first segment list is a fourth endpoint SID, the fourth endpoint SID indicates an outbound interface from previous (M-1)-hop to previous M-hop of the endpoint, and M is an integer greater than or equal to 2. For example, the fourth endpoint SID may be an end.X SID of previous M-hop of the endpoint of the SR policy.

When the result indicates that the first segment list does not point to the endpoint of the SR policy, before the first network device encapsulates the first service packet, to obtain a second service packet, the method may further include: The first network device determines, based on the destination address of the first service packet, whether there is forwarding information to the endpoint. For example, the forwarding information may be generated based on a private network route advertised by the endpoint, and the private network route may include a service SID of the endpoint. In this way, that the first network device encapsulates the first service packet, to obtain a second service packet may include: If there is the forwarding information to the endpoint, the first network device compresses the first segment list to obtain a compressed list and a network segment address, where the compressed list includes a plurality of compressed SIDs; the first network device obtains a second segment list, where the second segment list includes the compressed list and node information and function information in a service SID, the service SID indicates a service stream to the endpoint, and the service SID further includes the network segment address; and the first network device encapsulates the network segment address and the second segment list in the first service packet, to obtain the second service packet.

The service SID may be a VPN SID or a service chain SID of the endpoint.

The second service packet may carry the second segment list in an SRH; or the second service packet may carry the second segment list in an IPv6 header. For example, the second service packet may carry the second segment list in a destination address field of the IPv6 header.

In an example, the forwarding information to the endpoint may include structure information of the service SID, and the structure information indicates a structure of the service SID and for example, includes a length of each part (like the network segment address, the node information, and the function information) of the service SID. In this case, the method may further include: The first network device obtains the node information and the function information in the service SID from the service SID based on the structure information.

In this implementation, if the first network device determines that there is no forwarding information to the endpoint, to avoid a problem that the service packet cannot reach a destination node of the service packet because the service packet cannot continue to be forwarded after reaching a last hop of the SR path indicated by the first segment list, the first network device can prevent the first service packet from being encapsulated according to the SR policy.

In some implementations, the first network device may further obtain the SR policy. In a case, the SR policy may be obtained by the first network device based on a local configuration. In another case, the first network device may receive the SR policy sent by a control entity.

In an example, that the first network device receives the SR policy sent by a control entity may include: The first network device receives a border gateway protocol (Border Gateway Protocol, BGP) SR policy packet sent by the control entity, where the BGP SR policy packet includes the SR policy. A manner in which the BGP SR policy packet carries the first indication information includes: a flag bit in a segment list sub-type-length-value Segment List Sub-TLV; a flag bit in a segment routing policy tunnel attribute SR Policy Tunnel Attribute; or a flag bit in a segment sub-type-length-value Segment Sub-TLV in a segment routing policy segment list SR Policy Segment List.

In another example, that the first network device receives the SR policy sent by a control entity may include: The first network device receives a path computation element protocol (Path Calculation Element Protocol, PCEP) packet sent by the control entity, where the PCEP packet includes the SR policy. A manner in which the PCEP packet carries the first indication information includes: a flag bit in a path attributes object Path Attributes Object.

In some implementations, if the SR policy on the first network device is delivered by the control entity, after the SR path is established, the first network device may further report a status to the control entity by using a BGP link state (Link State, LS) packet, where the BGP LS packet includes second indication information, and the second indication information is associated with the first indication information. A manner in which the BGP LS packet carries the second indication information includes: a flag bit in a segment routing policy segment list type-length-value SR segment list TLV.

According to a second aspect, this application further provides a packet processing method. A control entity generates an SR policy, the SR policy includes a segment list and indication information, the indication information indicates whether the segment list points to an endpoint of the SR policy, the SR policy further includes endpoint information, and the endpoint information indicates the endpoint; and the control entity sends the SR policy to a first network device, where the first network device is a headend of the SR policy. It can be learned that, in the method, the control entity adds, to the SR policy, the indication information indicating whether the segment list points to the endpoint of the SR policy, and sends the SR policy to the headend of the SR policy, so that the headend of the SR policy can sense, based on the indication information, whether the segment list points to the endpoint of the SR policy, and perform corresponding processing and forwarding on the service packet based on a result indicated by the indication information. Regardless of whether the SR path determined based on the segment list in the SR policy matches a forwarding path of the service packet, this can ensure that the service packet reaches the endpoint of the SR policy, and improve a success rate of forwarding the service packet.

In some implementations, that the indication information indicates whether the segment list points to the endpoint of the SR policy includes: The indication information indicates whether a last segment identifier SID in the segment list points to the endpoint.

In an example, that the control entity sends the SR policy to a headend of the SR policy may include: The control entity sends a border gateway protocol BGP SR policy packet to the headend, where the BGP SR policy packet includes the SR policy.

A manner in which the BGP SR policy packet carries the indication information includes:
a flag bit in a segment list sub-type-length-value Segment List Sub-TLV;
a flag bit in a segment routing policy tunnel attribute SR Policy Tunnel Attribute; or
a flag bit in a segment sub-type-length-value Segment Sub-TLV in a segment routing policy segment list SR Policy Segment List.

In another example, that the control entity sends the SR policy to a headend of the SR policy may include: The control entity sends a PCEP packet to the headend, where the PCEP packet includes the SR policy.

A manner in which the PCEP packet carries the indication information includes:
a flag bit in a path attributes object Path Attributes Object.

It should be noted that for a specific implementation and achieved technical effect of the packet processing method in the second aspect, refer to the related descriptions of the first aspect.

According to a third aspect, this application further provides a packet processing apparatus. The apparatus is used in a first network device, and the apparatus may include, for example, a receiving unit, a processing unit, and a sending unit. The receiving unit is configured to receive a first service packet. The processing unit is configured to: in response to determining that a destination address of the first service packet matches a segment routing policy SR policy, determine, based on first indication information in the SR policy, whether a first segment list points to an endpoint of the SR policy, where the SR policy includes endpoint information, and the endpoint information indicates the endpoint. The processing unit is further configured to encapsulate the first service packet based on a result of whether the first segment list points to the endpoint of the SR policy, to obtain a second service packet. The sending unit is configured to forward the second service packet according to an SR path determined based on the first segment list.

In some implementations, that the result indicates that the first segment list points to the endpoint of the SR policy includes: A last segment identifier SID in the first segment list points to the endpoint. That a last first SID in the first segment list points to the endpoint includes: The last SID in the first segment list is a first endpoint SID, and the first endpoint SID indicates the endpoint; or the last SID in the first segment list is a second endpoint SID, and the second endpoint SID indicates an outbound interface that is on a previous-hop node of the endpoint and that points to the endpoint.

In an example, the processing unit is specifically configured to: compress the first segment list to obtain a compressed list and a network segment address, where the compressed list includes a plurality of compressed SIDs; obtain a second segment list, where the second segment list includes the compressed list and function information in a service SID, the service SID indicates a service stream to the endpoint, and the service SID further includes the network segment address; and encapsulate the network segment address and the second segment list in the first service packet, to obtain the second service packet.

In some other implementations, that the result indicates that the first segment list does not point to the endpoint of the SR policy includes: A last segment identifier SID in the first segment list does not point to the endpoint.

In this implementation, the processing unit is further configured to: before encapsulating the first service packet to obtain the second service packet, determine, based on the destination address of the first service packet, whether there is forwarding information to the endpoint.

In an example, the processing unit is specifically configured to: if there is the forwarding information to the endpoint, compress the first segment list to obtain a compressed list and a network segment address, where the compressed list includes a plurality of compressed SIDs; obtain a second segment list, where the second segment list includes the compressed list and node information and function information in a service SID, the service SID indicates a service stream to the endpoint, and the service SID further includes the network segment address; and encapsulate the network segment address and the second segment list in the first service packet, to obtain the second service packet.

The forwarding information to the endpoint includes structure information of the service SID, the structure information indicates a structure of the service SID, and the processing unit is further configured to: obtain the node information and the function information in the service SID from the service SID based on the structure information.

In another example, the processing unit is further configured to: if there is no forwarding information to the endpoint, prevent the first service packet from being encapsulated according to the SR policy.

The service SID is a virtual private network VPN SID or a service chain SID of the endpoint.

The second service packet carries the second segment list in a segment routing header; or the second service packet carries the second segment list in an internet protocol version 6 IPv6 header.

In some implementations, the receiving unit is further configured to: receive the SR policy sent by a control entity.

In an example, the receiving unit is specifically configured to: receive a border gateway protocol BGP SR policy packet sent by the control entity, where the BGP SR policy packet includes the SR policy.

A manner in which the BGP SR policy packet carries the first indication information includes:
a flag bit in a segment list sub-type-length-value Segment List Sub-TLV;
a flag bit in a segment routing policy tunnel attribute SR Policy Tunnel Attribute; or
a flag bit in a segment sub-type-length-value Segment Sub-TLV in a segment routing policy segment list SR Policy Segment List.

In another example, the receiving unit is specifically configured to: receive a path computation element protocol PCEP packet sent by the control entity, where the PCEP packet includes the SR policy.

A manner in which the PCEP packet carries the first indication information includes:
a flag bit in a path attributes object Path Attributes Object.

In embodiments of this application, the SR policy is a segment routing on internet protocol version 6 policy SRv6 policy, and a SID in the first segment list is an IPv6 address; or the SR policy is a segment routing on multi-protocol label switching policy SR MPLS policy, and a SID in the first segment list is an MPLS label.

It should be noted that for a specific implementation and achieved technical effect of the apparatus provided in this application, refer to the method provided in the first aspect.

According to a fourth aspect, this application further provides a packet processing apparatus. The apparatus is used in a control entity, and the apparatus may include, for example, a processing unit and a sending unit. The processing unit is configured to generate a segment routing policy SR policy, where the SR policy includes a segment list and indication information, the indication information indicates whether the segment list points to an endpoint of the SR policy, the SR policy further includes endpoint information, and the endpoint information indicates the endpoint. The sending unit is configured to send the SR policy to a headend of the SR policy.

In some implementations, that the indication information indicates whether the segment list points to the endpoint of the SR policy includes: the indication information indicates whether a last segment identifier SID in the segment list points to the endpoint.

In some implementations, the sending unit is specifically configured to: send a border gateway protocol BGP SR policy packet to the headend, where the BGP SR policy packet includes the SR policy.

A manner in which the BGP SR policy packet carries the indication information includes:
a flag bit in a segment list sub-type-length-value Segment List Sub-TLV;
a flag bit in a segment routing policy tunnel attribute SR Policy Tunnel Attribute; or
a flag bit in a segment sub-type-length-value Segment Sub-TLV in a segment routing policy segment list SR Policy Segment List.

In some other implementations, the sending unit is specifically configured to: send a path computation element protocol PCEP packet to the headend, where the PCEP packet includes the SR policy.

A manner in which the PCEP packet carries the indication information includes:
a flag bit in a path attributes object Path Attributes Object.

It should be noted that for a specific implementation and achieved technical effect of the apparatus provided in this application, refer to the method provided in the second aspect.

According to a fifth aspect, this application provides a network device. The network device includes a processor and a memory, the memory is configured to store instructions or program code, and the processor is configured to invoke the instructions or the program code from the memory and run the instructions or the program code, to perform the method according to any one of the first aspect or the possible implementations of the first aspect.

According to a sixth aspect, this application provides a control entity. The control entity includes a processor and a memory, the memory is configured to store instructions or program code, and the processor is configured to invoke the instructions or the program code from the memory and run the instructions or the program code, to perform the method according to any one of the second aspect or the possible implementations of the second aspect.

According to a seventh aspect, this application provides a communication system. The communication system may include a first network device and a control entity, the first network device is configured to perform the method according to any one of the first aspect or the possible implementations of the first aspect, and the control entity is configured to perform the method according to any one of the second aspect or the possible implementations of the second aspect. The first network device may be the packet processing apparatus provided in the third aspect, and the control entity may be the packet processing apparatus provided in the fourth aspect; or the first network device may be the network device provided in the fifth aspect, and the control entity may be the control entity provided in the sixth aspect.

According to an eighth aspect, this application provides a computer-readable storage medium, including instructions, a program, or code. When the instructions, the program, or the code is executed on a computer, the computer is enabled to perform the method according to any one of the first aspect or the possible implementations of the first aspect, or the method according to any one of the second aspect or the possible implementations of the second aspect.

According to a ninth aspect, this application provides a computer program product. When the computer program product runs on a network device, the network device is enabled to perform the method according to any one of the first aspect or the possible implementations of the first aspect, or the method according to any one of the second aspect or the possible implementations of the second aspect.

### BRIEF DESCRIPTION OF DRAWINGS

FIG. 1 is a diagram of a structure of a network to which this application is applicable;
FIG. 2a is a diagram of a packet processing method according to this application in the network shown in FIG. 1;
FIG. 2b is a diagram of another packet processing method according to this application in the network shown in FIG. 1;
FIG. 3 is a diagram of a structure of another network to which this application is applicable;
FIG. 4 is a schematic flowchart of a packet processing method 100 according to this application;
FIG. 5 is a diagram of a format in which a BGP SR policy packet carries first indication information according to this application;
FIG. 6 is a diagram of a format in which a PCEP packet carries first indication information according to this application;
FIG. 7 is a diagram of a format in which a BGP LS packet carries second indication information according to this application;
FIG. 8 is a diagram of structure information of a service SID according to this application;
FIG. 9 is a diagram of a structure of a packet processing apparatus 900 according to this application;
FIG. 10 is a diagram of a structure of another packet processing apparatus 1000 according to this application;
FIG. 11 is a diagram of a structure of a network device 1100 according to this application;
FIG. 12 is a diagram of a structure of another network device 1200 according to this application; and
FIG. 13 is a diagram of a structure of a communication system 1300 according to this application.

### DESCRIPTION OF EMBODIMENTS

Segment routing (Segment Routing, SR) is a protocol designed based on a source routing concept to forward a service packet on a network. In an SR technology, a segment routing header (Segment Routing Header, SRH) is inserted into a service packet, and an explicit segment list is pushed into the SRH. An intermediate node continuously updates a destination address and an offset address indicating a segment identifier (Segment Identifier, SID) in the segment list to complete hop-by-hop forwarding. An SR policy (SR policy) is a traffic diversion policy in an SR protocol. Generally, <Headpoint, color, endpoint> or <color, endpoint> uniquely identifies the SR policy. The SR policy may include a plurality of candidate paths (Candidate Paths), each candidate path may be associated with a plurality of segment lists, each segment list includes a plurality of segments, and each segment is a SID. For example, an encapsulation structure of an SR policy is as follows:

```
              SR Policy SAFI NLRI: <Distinguisher, Color, Endpoint>
              Attributes
                 Tunnel Encaps Attribute (23)
                    Tunnel Type: SR Policy
                       Binding SID
                       Preference
                       Priority
                       Policy Name
                       Policy Candidate Path Name
                       Explicit NULL Label Policy (ENLP)
                         Segment List
                          Weight
                          Segment
                          Segment
                          ...
                       ...
```

Distinguisher is an identifier of network layer reachability information (Network Layer Reachability Information, NLRI) carrying the SR policy, and indicates that content carried by NRLI is the SR policy. A color and an endpoint may be denoted as endpoint information, identify an endpoint, and are also used as an index for SR policy traffic diversion. That is, if a service packet matches a color and an endpoint in the SR policy, the service packet may be processed according to the SR policy. It should be noted that, in some cases, the SR policy may include only a color. In this case, the color may also be denoted as endpoint information, identify an endpoint, and is also used as an index for SR policy traffic diversion. That is, if a service packet matches a color in the SR policy, the service packet may be processed according to the SR policy.

Preference indicates a priority of a candidate path. In a plurality of candidate paths in the SR policy, a candidate path with a highest priority is used as a working path of the SR policy, and another candidate path in the SR policy is a backup path of the working path. Weight indicates a weight of a segment list in a candidate path. Load sharing may be performed based on a weight of a segment list between at least one segment list in a candidate path used as a working path. The segment list in the SR policy mentioned in embodiments of this application is the segment list in the candidate path that is in the SR policy and that is used as the working path.

Segment is an element for forwarding in the SR policy, and may also be generally referred to as a SID. The SID may include two parts: a locator (Locator) and a function (Function). A SID format may be locator:function, where a locator occupies high-order bits of the SID, and the function part occupies a remaining part of the SID. A locator has a routing function. Another node in a network can locate this node through a locator network segment route. All SIDs advertised by the node can be reached through the locator network segment route. Generally, a locator is unique in SR domain. A function indicates instructions (Instructions) of a node. These instructions are preset by the node and instruct functional operations that need to be performed by the node that generates the SID. An optional parameter field (Arguments) may be obtained, through dividing, in the function part. In this case, the SID format may be changed to locator: function: arguments, where Arguments occupies lower-order bits of the SID, and information such as streams and services of some packets may be defined by using the Arguments field. Embodiments of this application are not related to improvement of Arguments. Therefore, whether Arguments is obtained through dividing in the function is not distinguished in a subsequent SID format. A locator in the SID may be divided into two parts: a network segment address (block) and node (node) information. A block identifies a network segment address. SIDs of nodes in a same network segment have a same block. A node identifies a node, and SIDs of different nodes have different nodes. In this way, the SID format may also be expressed as block: node: function.

In some application scenarios, an SR path determined based on a segment list may not match a forwarding path of a service packet, for example, the SR path is only a part of the forwarding path. Therefore, if the service packet is forwarded according to the SR path determined based on the segment list, the service packet may fail to be effectively transmitted. For example, if an SR path determined based on a segment list in an SR policy on a network device A is a path 1 from the network device A to a network device C via a network device B, and an endpoint indicated by endpoint information in the SR policy is a network device D, a forwarding path of a service packet matching the SR policy includes at least a path 2 that is determined according to the SR policy and that is from the network device A to the network device D via the network device B and the network device C. The path 1 is only a part of the path 2, that is, the segment list corresponding to the path 1 does not indicate the endpoint (namely, the network device D) of the SR policy. If the service packet matching the SR policy is forwarded according to the SR path 1 determined based on the segment list, because the network device A cannot sense whether the segment list corresponding to the SR path 1 indicates the endpoint of the SR policy, processing performed by the network device A on the service packet based on the segment list may result in a case that the service packet cannot be accurately forwarded to the endpoint (namely, the network device D) of the SR policy after arriving at the network device C. That is, a current technical solution cannot ensure effective transmission of the service packet in the SR policy.

For example, to overcome a problem of low encapsulation and transmission efficiency of a service packet caused by an SR technology, a headend of SR usually compresses a to-be-encapsulated segment list in the service packet. In this compression scenario, it is very important for the headend to sense whether an SR path determined based on the segment list indicates an endpoint of the SR policy. In this compression scenario, because nodes indicated by SIDs in an SRH belong to a same network segment, the headend of the SR may extract a common part, namely, a block, of all SIDs in the segment list, and a remaining part (which may be denoted as a compressed SID) of each SID may be represented as node:function. In this way, the common block of all the SIDs in the segment list needs to be encapsulated in the SRH of the service packet only once, thereby improving SR encapsulation efficiency. To further improve encapsulation efficiency, the headend of the SR path may also compress another type of service SID (for example, a virtual private network (Virtual Private Network, VPN) SID) and the SID in the segment list, and then encapsulate SIDs together. The service SID format may also be expressed as block: node: function. For example, a service SID is a VPN SID. If an SR path determined based on a segment list indicates an endpoint of an SR policy, because a block of the VPN SID is the same as a block of each SID in the segment list, and a service packet can be forwarded to the endpoint of the SR policy based on a last SID in the segment list, VPN SID-based route searching and forwarding are not required, and therefore a node in the VPN SID does not need to be carried for identification. When the VPN SID and the SID in the segment list are compressed and then encapsulated, only the function in the VPN SID is compressed, and a node of the VPN SID does not need to be carried. Alternatively, if an SR path determined based on a segment list cannot indicate an endpoint of an SR Policy, because a block of the VPN SID is the same as a block of each SID in the segment list, and a service packet cannot be forwarded to the endpoint of the SR Policy based on a last SID in the segment list, the VPN SID needs to be used by a node indicated by the last SID in the segment list to search for a route to the endpoint of the SR Policy. In this way, the VPN SID and the SID in the segment list are compressed and then encapsulated, in addition to the function in the VPN SID, the node in the VPN SID needs to be compressed to identify the endpoint. Therefore, the node indicated by the last SID in the segment list can be spliced to obtain the VPN SID, to ensure that the service packet can be effectively forwarded based on the VPN SID subsequently.

In some other scenarios, whether the segment list in the SR Policy points to the endpoint may be sensed, and may also be used as an important basis for the headend of the SR Policy to perform path splicing or control processing.

Based on this, embodiments of this application provide a packet processing method. An SR policy on a network device includes a segment list (segment list) and indication information, and the indication information indicates whether the segment list points to an endpoint of the SR policy. The endpoint is a node determined based on endpoint information in the SR policy. In this way, after receiving a first service packet whose destination address matches the SR policy, the network device may determine, based on the indication information in the SR policy, whether the segment list in the SR policy points to the endpoint of the SR policy. The network device encapsulates the first service packet based on a result of whether the segment list points to the endpoint of the SR policy, to obtain a second service packet, and forwards the second service packet according to an SR path determined based on the segment list.

It can be learned that, in the method provided in embodiments of this application, the indication information indicating whether the segment list points to the endpoint of the SR policy is added to the SR policy, so that a headend of the SR policy can sense, based on the indication information, whether the segment list points to the endpoint of the SR policy, and perform corresponding processing and forwarding on the service packet based on the result indicated by the indication information. Regardless of whether the SR path determined based on the segment list in the SR policy matches a forwarding path of the service packet, this can ensure that the service packet reaches the endpoint of the SR policy.

The endpoint information may be any information, in the SR policy, that can identify the endpoint. For example, the endpoint information may be an endpoint in the SR policy. For another example, the endpoint information may be a color in the SR policy. For still another example, the endpoint information may be an endpoint and a color in the SR policy.

The indication information in the SR policy may indicate whether the segment list in the SR policy points to the endpoint of the SR policy. In a case, the indication information may correspond to the SR policy, that is, all segment lists in the SR policy correspond to a same piece of indication information. The indication information may indicate whether all the segment lists in the SR policy point to the endpoint of the SR policy. In another case, the indication information may correspond to one segment list in the SR policy, that is, each segment list in the SR policy corresponds to one piece of indication information. The indication information may indicate whether a segment list corresponding to the indication information in the SR policy points to the endpoint of the SR policy. Indication information of segment lists may be the same or may be different. In embodiments of this application, an example in which the indication information corresponds to one segment list in the SR policy is used for subsequent description.

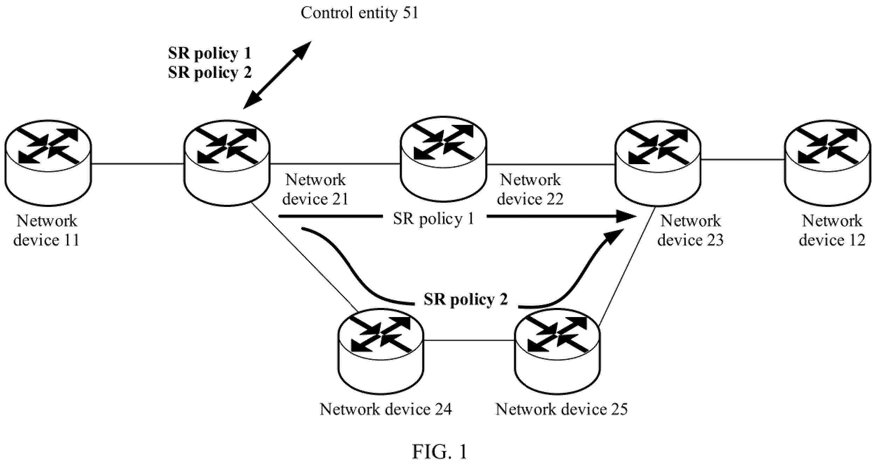

A network shown in FIG. 1 is used as an example for description. Refer to FIG. 1, the network may include a network device 11, a network device 12, a network device 21, a network device 22, a network device 23, a network device 24, a network device 25, and a control entity 51. The network device 11 is connected to the network device 12 via the network device 21, the network device 22, and the network device 23 in sequence. The network device 11 is also connected to the network device 12 via the network device 21, the network device 24, the network device 25, and the network device 23. The control entity 51 may interact with the network device 21.

Before processing a service packet, the control entity 51 may calculate SR policies from the network device 21 to the network device 23, to obtain an SR policy 1 and an SR policy 2, and deliver the SR policy 1 and the SR policy 2 to a headend (namely, the network device 21). The network device 21 receives and stores the SR policy 1 and the SR policy 2, to prepare for subsequent processing of a service packet transmitted according to the SR policy 1 or the SR policy 2. The SR policy 1 includes <color 1, endpoint 2::2>, a segment list 1<SID 11, SID 12, SID 13>, and indication information=1. The SR policy 2 includes <color 2, endpoint 2::2>, a segment list 2<SID 21, SID 24>, and indication information=0. 2::2 may be a loopback (loopback) address of the network device 23. The SID 11, the SID 12, and the SID 13 respectively identify the network device 21, the network device 22, and the network device 23. The SID 21 and the SID 24 respectively identify the network device 21 and the network device 24. The indication information=1 indicates that the segment list 1 points to an endpoint (namely, the network device 23) of the SR policy 1. The indication information=0 indicates that the segment list 2 does not point to an endpoint (namely, the network device 23) of the SR policy 2.

In an example, the network device 21 receives a service packet 1 sent by the network device 11, a destination address 1 of the service packet 1 matches 2::2, and the service packet 1 carries a color 1. In this case, the network device 21 may determine that the service packet 1 matches the SR policy 1. Then, the network device 21 determines, based on the indication information=1 in the SR policy 1, that the segment list 1 points to the endpoint of the SR policy 1. Then, the network device 21 encapsulates the service packet 1 based on a result that the segment list 1 points to the endpoint of the SR policy 1, to obtain a service packet 2, and forwards the service packet 2 according to an SR path 1 determined based on the segment list 1.

In another example, the network device 21 receives a service packet 3 sent by the network device 11, a destination address 2 of the service packet 3 matches 2::2, and the service packet 3 carries a color 2. In this case, the network device 21 may determine that the service packet 3 matches the SR policy 2. Then, the network device 21 determines, based on the indication information=0 in the SR policy 2, that the segment list 2 does not point to the endpoint of the SR policy 2. Then, the network device 21 encapsulates, based on a result that the segment list 2 does not point to the endpoint of the SR policy 2, the service packet 3 to obtain a service packet 4, and forwards the service packet 4 according to an SR path 2 determined based on the segment list 2.

It should be noted that, because indication information included in the SR policy 1 and the SR policy 2 indicates different meanings, a manner in which the network device 21 encapsulates the service packet 1 is different from a manner in which the network device 21 encapsulates the service packet 3.

An example in which the network device 21 encapsulates and compresses SIDs in a segment list and a service SID together is used to describe encapsulation and transmission of a service packet by the network device 21 in different indication results of indication information. Before the network device 21 receives the service packet, the network device 23 may obtain a service SID 1 in a static configuration or dynamic allocation manner. For example, the service SID 1 may be A2:1::B100. Therefore, the network device 23 may generate forwarding information 1 and forwarding information 2 based on the service SID. The forwarding information 1 may include a block and a function of the service SID 1, and the forwarding information 2 may include a block, a node, and a function of the service SID 1. Then, the network device 23 may advertise a private network route, where the private network route includes the service SID 1 and structure information, and the structure information is information indicating a structure of the service SID 1, for example, the structure information may include a length occupied by each part of the service SID 1 in the service SID 1. After receiving the private network route that carries the service SID 1 and the structure information and that is advertised by the network device 23, the network device 21 installs the private network route, and generates forwarding information 3. The forwarding information 3 includes but is not limited to a virtual routing forwarding (Virtual Routing Forwarding, VRF) identifier, a prefix, and the service SID, where the VRF identifier may be, for example, 100, the prefix may be, 2.2.2.2/24, and the service SID is a service SID 1 (for example, A2:1::B100).

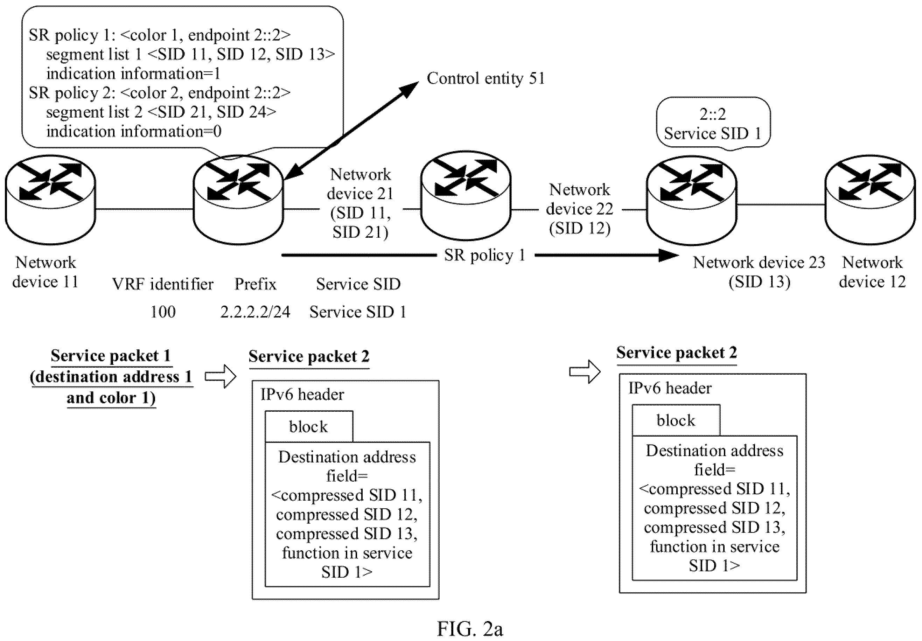

As shown in FIG. 2a, after receiving the service packet 1, the network device 21 may determine, based on the destination address and a color 1 that are carried in the service packet 1, that the service packet 1 matches the SR policy 1; and find, based on the destination address of the service packet 1, the forwarding information 3 whose prefix is 2.2.2.2/24, and determine that the service SID 1 in the forwarding information 3 needs to be carried in the service packet 1. Therefore, the network device 21 determines, based on the indication information=1 in the SR policy 1, that the segment list 1 points to the endpoint of the SR policy 1. Then, a process in which the network device 21 encapsulates, based on the result that the segment list 1 points to the endpoint of the SR policy 1, the service packet 1 to obtain the service packet 2 may include: compressing the segment list 1 to obtain a block and a compressed list 1, where the compressed list 1 includes a plurality of compressed SIDs; obtaining a segment list 1' based on the compressed list 1 and function (Function) information in the service SID 1; and encapsulating the block and the segment list 1' in the service packet 1 to obtain the service packet 2, where the block and the segment list 1' may be encapsulated in an SRH in the service packet 2, or may be encapsulated in an internet protocol version 6 (Internet Protocol version 6, IPv6) header in the service packet 2, for example, encapsulated in a destination address field of an IPv6 header in the service packet 2. FIG. 2a shows a structure of the service packet 2 by encapsulating the block and the segment list 1' in the destination address field of the IPv6 header in the service packet 2. In this way, the network device 21 may forward the service packet 2 to the network device 23 according to an SR path 1, and the network device 23 performs a corresponding operation based on the function in the service SID 1 in the segment list 1' in the service packet 2.

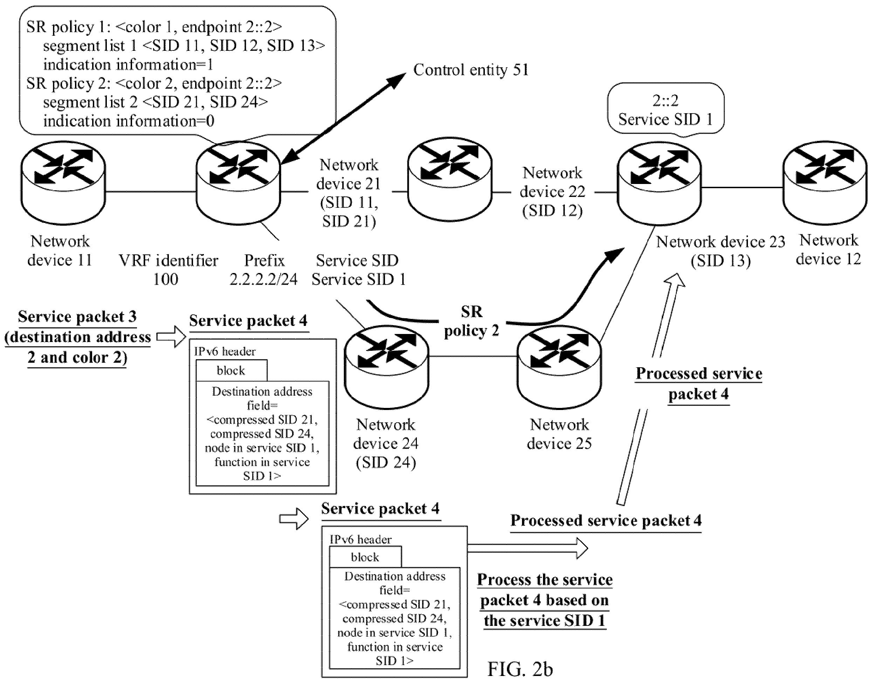

As shown in FIG. 2b, after receiving the service packet 3, the network device 21 may determine, based on the destination address and a color 2 that are carried in the service packet 3, that the service packet 3 matches the SR policy 2; and find, based on the destination address of the service packet 3, the forwarding information 3 whose prefix is 2.2.2.2/24, and determine that the service SID 1 in the forwarding information 3 needs to be carried in the service packet 1. Therefore, the network device 21 determines, based on the indication information=0 in the SR policy 2, that the segment list 2 does not point to the endpoint of the SR policy 2. Then, a process in which the network device 21 encapsulates, based on the result that the segment list 2 points to the endpoint of the SR policy 2, the service packet 3 to obtain the service packet 4 may include: compressing the segment list 2 to obtain a block and a compressed list 2, where the compressed list 2 includes a plurality of compressed SIDs; obtaining a segment list 2' based on the compressed list 2 and the node and the function in the service SID 1; and encapsulating the block and the segment list 3' in the service packet 3 to obtain the service packet 4, where the block and the segment list 2' may be encapsulated in an SRH in the service packet 4, or may be encapsulated in an IPv6 header in the service packet 4, for example, encapsulated in a destination address field of an IPv6 header in the service packet 4. FIG. 2b shows a structure of the service packet 4 by encapsulating the block and the segment list 2' in the destination address field of the IPv6 header in the service packet 4. In this way, the network device 21 may forward the service packet 4 to the network device 24 according to an SR path 2. The network device 24 may obtain the service SID 1 through splicing based on the block in the service packet 2 and the node and the function in the service SID 1 in the segment list 2', and then search for a route based on the service SID 1, process the service packet 4, and forward a processed service packet 4 to the network device 23.

It should be noted that, after receiving the service packet 2, the network device 23 may perform splicing based on the block in the service packet 2 and the function in the service SID 1 in the segment list 1' and perform matching on the forwarding information 1, and perform subsequent forwarding based on the forwarding information 1, for example, process the service packet 2, and send a processed service packet 2 to the network device 12. After receiving the service packet 4, the network device 23 may perform splicing based on the block in the service packet 4 and the node and the function in the service SID 1 in the segment list 2' and perform matching on the forwarding information 2, and perform subsequent forwarding based on the forwarding information 2, for example, process the service packet 4, and send a processed service packet 4 to the network device 12.

Compressing the segment list 1 to obtain the block and the compressed list 1 may be, for example, compressing the SIDs in the segment list 1 to obtain the block and the compressed list 1, where all the SIDs in the segment list 1 include the blocks, and the compressed list 1 is a list formed according to a sequence of SIDs in compressed SIDs in the segment list 1 after the blocks are removed from the SIDs in the segment list 1. The segment list 1 is <SID 11, SID 12, SID 13>, and the compressed list 1 may be <compressed SID 11, compressed SID 12, compressed SID 13>, where the SID 11 may be represented as: block: compressed SID 11, the SID 12 may be represented as: block: compressed SID 12, and the SID 13 may be represented as block: compressed SID 13. Similarly, compressing the segment list 2 to obtain the block and the compressed list 2 may be, for example, compressing the SIDs in the segment list 2 to obtain the block and the compressed list 2, where all the SIDs in the segment list 2 include the blocks, and the compressed list 2 is a list formed according to a sequence of SIDs in compressed SIDs in the segment list 2 after the blocks are removed from the SIDs in the segment list 2. The segment list 2 is <SID 21, SID 24>, and the compressed list 2 may be <compressed SID 121, compressed SID 24>, where the SID 21 may be represented as: block:compressed SID 21, and the SID 24 may be represented as: block:compressed SID 24.

The segment list 1' is obtained based on the compressed list 1 and the function in the service SID 1. For example, the segment list 1' may be obtained by adding a function in the service SID 1 at the end of the compressed list 1. If the compressed list 1 is <compressed SID 11, compressed SID 12, compressed SID 13>, the segment list 1' may be represented as <compressed SID 11, compressed SID 12, compressed SID 13, and function in service SID 1>. The segment list 2' is obtained based on the compressed list 2 and the node and the function in the service SID 1. For example, the segment list 2' may be obtained by adding the node and a function in the service SID 1 at the end of the compressed list 2. If the compressed list 2 is <compressed SID 21, compressed SID 24>, the segment list 2' may be represented as <compressed SID 21, compressed SID 24, node in the service SID 1, function in the service SID 1>.

It can be learned that the headend of the SR policy senses, based on the indication information that is in the SR policy and that indicates whether the segment list points to the endpoint of the SR policy, whether the segment list points to the endpoint of the SR policy, and perform corresponding processing and forwarding on the service packet based on the result indicated by the indication information. This ensures that service packet reach the endpoint of the SR policy.

In some other possible implementations, when the SR policy crosses autonomous systems (Autonomous System, AS) domains, the endpoint of the SR policy is usually an AS domain border node (for example, an autonomous system boundary router (Autonomous System Boundary Router, ASBR)). In this case, the headend of the SR policy not only needs to determine, based on the indication information in the SR policy, whether the segment list points to the endpoint of the SR policy, but also needs to determine whether there is forwarding information to the endpoint and whether there is forwarding information to a destination node of the received service packet locally. The destination node of the service packet may be determined based on the destination address of the service packet. In one case, if it is determined that there is the forwarding information 4 to the endpoint and there is the forwarding information 5 to the destination node of the received service packet locally, the headend may encapsulate the segment list, the service SID 2, and the service SID 3 into the received service packet. This implements effective cross-domain transmission of the service packet. In another case, if it is determined that the segment list points to the endpoint of the SR policy, but there is no forwarding information to the destination node of the received service packet locally, the headend may determine that routing and forwarding cannot be performed after the service packet is transmitted to the endpoint of the SR policy, and may determine that the service packet cannot be forwarded according to the SR policy. In this case, the headend prevents the service packet from being encapsulated according to the SR policy.

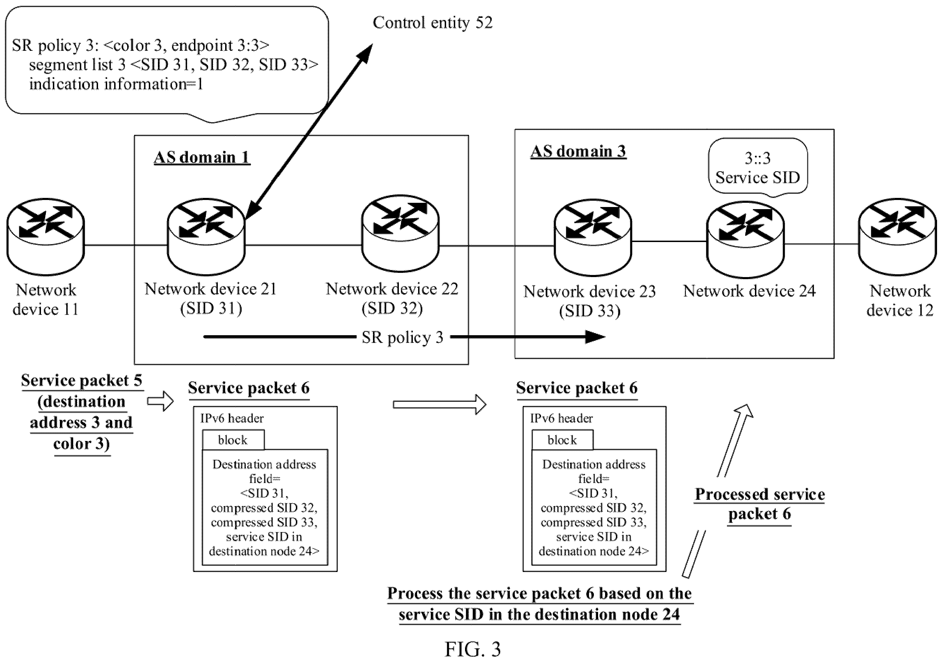

For example, a network shown in FIG. 3 is used to describe a cross-AS-domain scenario. Refer to FIG. 3, the network may include a network device 11, a network device 12, a network device 21, a network device 22, a network device 23, a network device 24, and a control entity 52. The network device 11 is connected to the network device 12 via the network device 21, the network device 22, the network device 23, and the network device 24 in sequence. The network device 22 and the network device 23 are ASBRs, and the control entity 52 may interact with the network device 21.

Before processing a service packet, the control entity 52 may calculate an SR policy from the network device 21 to the network device 23, to obtain an SR policy 3, and deliver the SR policy 3 to a headend (namely, the network device 21). The network device 21 receives and stores the SR policy 3, to prepare for subsequent processing of a service packet transmitted according to the SR policy 3. The SR policy 3 includes <color 3, endpoint 3::3>, a segment list 3<SID 31, SID 32, SID 33>, and indication information=1. 3::3 may be a loopback address of the network device 23. The SID 31, the SID 32, and the SID 33 respectively identify the network device 21, the network device 22, and the network device 23. The indication information=1 indicates that the segment list 3 points to an endpoint (namely, the network device 23) of the SR policy 3. In this way, the network device 21 receives a service packet 5 sent by the network device 11, a destination address 3 of the service packet 5 matches 3::3, and the service packet 3 carries a color 3. In this case, the network device 21 may determine that the service packet 5 matches the SR policy 3. Then, the network device 21 determines, based on the indication information=1 in the SR policy 3, that the segment list 3 points to the endpoint of the SR policy 3. Then, the network device 21 determines whether there is forwarding information to a destination node 24 of the service packet 5 locally. If there is the forwarding information locally, the network device 21 encapsulates the service packet 5 based on the segment list 3 and a service SID of the destination node to obtain a service packet 6, forwards the service packet 6 to the network device 23 according to an SR path 3 determined based on the segment list 3, and forwards the service packet 6 to the network device 24 according to a forwarding path determined by searching for the service SID of the destination node. Alternatively, if the network device 21 determines that there is no forwarding information to the destination node 24 of the service packet 5 locally, the network device 21 prevents the service packet 5 from being encapsulated according to the SR policy 3.

It can be learned that, in the cross-AS-domain scenario, the headend of the SR policy senses, based on the indication information that is in the SR policy and that indicates whether the segment list points to the endpoint of the SR policy, whether the segment list points to the endpoint of the SR policy, and perform corresponding processing and forwarding on the service packet with reference to a determining result of whether there is the forwarding information to the destination node of the service packet locally. This ensures that the service packet is effectively forwarded to the destination node on the network.

It should be noted that, in embodiments of this application, when cross-domain is not considered, a path from the headend to the endpoint of the SR policy is denoted as a forwarding path, a path determined based on the segment list in the SR policy is denoted as an SR path, and a service stream, to the endpoint, indicated by the service SID based on a path matching the service SID is denoted as a service path. Alternatively, when cross-domain is considered, a path from the headend to the endpoint of the SR policy is denoted as a first forwarding path, and a path remaining after the first forwarding path is removed from paths from the headend of the SR policy to the destination node of the service packet is denoted as a second forwarding path.

It should be noted that, in embodiments of this application, the SID in the segment list may be a SID identifying a node, for example, may be an end SID of the node, and the end SID identifies a destination address prefix in a network. Alternatively, the SID in the segment list may be a SID used to identify an outbound interface of a node, for example, may be an end.X SID of the node, and the end.X SID identifies a layer 3 cross connection, or may be understood as identifying a link in a network. When the SID in the segment list is the end SID, that the segment list points to the endpoint of the SR policy may mean that a last SID in the segment list is an end SID of the endpoint; or that the segment list does not point to the endpoint of the SR policy may mean that a last SID in the segment list is not an end SID of the endpoint, for example, may be an end SID of a previous N (N is an integer greater than or equal to 1)-hop node of the endpoint. When the SID in the segment list is the end.X SID, that the segment list points to the endpoint of the SR policy may mean that a last SID in the segment list is an end.X SID of a previous-hop node of the endpoint; or that the segment list does not point to the endpoint of the SR policy may mean that a last SID in the segment list is an end.X SID of a previous M (M is an integer greater than or equal to 2)-hop of the endpoint, for example, may be an end.X SID of a previous 2-hop node of the endpoint.

It should be noted that in embodiments of this application, the service SID may be a VPN SID, and identifies a VPN; or the service SID may be a service chain (Service Chain) SID, and identifies a service chain.

It should be noted that, in embodiments of this application, the SR policy may be a segment routing on internet protocol version 6 (Segment Routing on IPv6, SRv6) policy, and the SID in the segment list is in a form of an IPv6 address; or the SR policy may be a segment routing on multi-protocol label switching (Segment Routing on Multi-Protocol Label Switching, SR MPLS) policy, and a SID in the segment list is an MPLS label.

It should be noted that the network device and the node in embodiments of this application have a same meaning, and may be alternately understood and used. The network device may be a communication device that has a packet forwarding function, like a switch, a router, a virtual routing device, or a virtual forwarding device. For example, in FIG. 1, the network device 21 and the network device 23 may be PE devices, the network device 22, the network device 24, and the network device 25 may be P devices, and the network device 11 and the network device 12 may be customer premises equipment (Customer Premises Equipment, CPE). The control entity may be a controller or another entity having a path computation function. For example, the control entity 51 may be a path computation element (Path Calculation Element, PCE), and the network device 21 may include a path computation client (Path Calculation Client, PCC) that can communicate with the PCE.

The foregoing describes embodiments of this application in a form of scenario embodiments. The following describes specific implementations of embodiments of this application in detail with reference to the accompanying drawings.

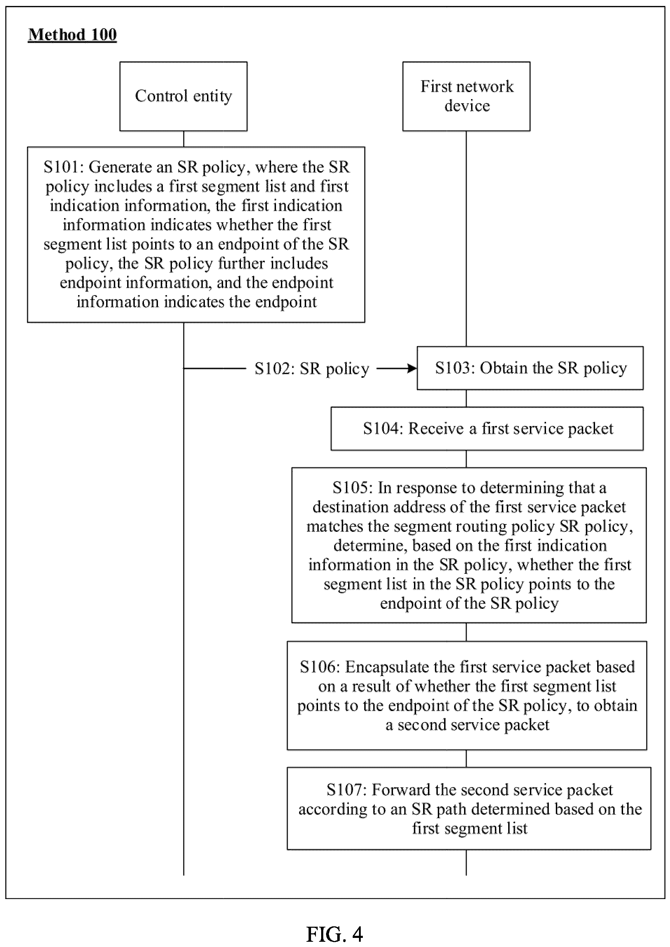

FIG. 4 is a schematic flowchart of a packet processing method 100 according to an embodiment of this application. In the method 100, for ease of understanding and description, an interaction manner between a first network device and a control entity is used for description. The first network device may correspond to the network device 21 in the network shown in FIG. 1, FIG. 2a, FIG. 2b, or FIG. 3, and the control entity may correspond to the control entity 51 in the network shown in FIG. 1, FIG. 2a, or FIG. 2b, or the control entity may correspond to the control entity 52 in the network shown in FIG. 3.

As shown in FIG. 4, the method 100 may include, for example, the following S101 to S107.

S101: The control entity generates an SR policy, where the SR policy includes a first segment list and first indication information, the first indication information indicates whether the first segment list points to an endpoint of the SR policy, the SR policy further includes endpoint information, and the endpoint information indicates the endpoint.

S102: The control entity sends the SR policy to the first network device.

S103: The first network device obtains the SR policy.

When generating the SR policy, the control entity not only obtains the first segment list based on a path computation result, but also determines whether the first segment list points to the endpoint of the SR policy, and reflects a determining result in the SR policy in a form of the first indication information. For example, if the first indication information is equal to a first value (for example, 1), it may indicate that the first segment list points to the endpoint of the SR policy; or if the first indication information is equal to a second value (for example, 0), it may indicate that the first segment list does not point to the endpoint of the SR policy.

For example, when the SR policy includes a color and an endpoint, the endpoint may be used as the endpoint information, or both the color and the endpoint may be used as the endpoint information, and the endpoint of the SR policy is determined based on the endpoint information. For another example, when the SR policy includes only a color, the color may be used as the endpoint information, and the endpoint of the SR policy is determined based on the endpoint information.

Whether the first segment list points to the endpoint of the SR policy may be, for example, whether a last SID in the first segment list points to the endpoint of the SR policy. That a last SID in the first segment list points to the endpoint of the SR policy may include: The last SID in the first segment list is a first endpoint SID, and the first endpoint SID indicates the endpoint, for example, the first endpoint SID is an end SID of the endpoint; or the last SID in the first segment list is a second endpoint SID, and the second endpoint SID indicates an outbound interface that is on a previous-hop node of the endpoint and that points to the endpoint, for example, the second endpoint SID is an end.X SID of a previous-hop node of the endpoint, and the end.X SID may point to the endpoint through the outbound interface.

In an example, the control entity may be an independent entity device. In this case, after generating the SR policy, the control entity may send the SR policy to the first network device. For example, if the control entity is an independently deployed PCE, the first network device includes a PCC, and the first network device is a headend of the SR policy, for example, S101 to S103 may be: The PCE generates and sends the SR policy to the PCC in the first network device, and the first network device obtains the SR policy.

In another example, the control entity may be a module integrated in the first network device. In this case, that the control entity sends the SR policy to the first network device in S102 may be understood as data exchange between internal modules in the first network device. For example, if a PCE and a PCC are deployed in the first network device, and the first network device is a headend of an SR policy, for example, S101 to S103 may be: The PCE in the first network device generates and sends the SR policy to the PCC, and the first network device obtains the SR policy.

The following uses a scenario in which the control entity and the first network device are separately deployed as an example for description.

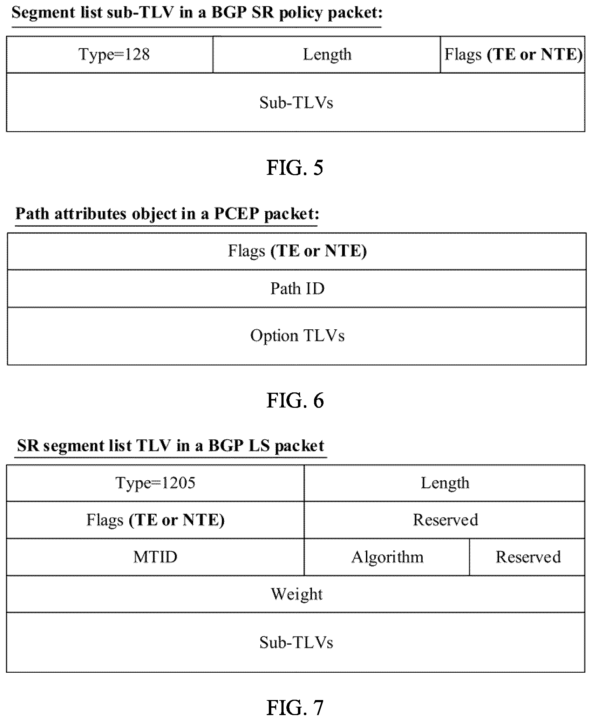

In some implementations, S102 may include: The control entity sends a border gateway protocol (Border Gateway Protocol, BGP) SR policy packet to the first network device, where the BGP SR policy packet includes the SR policy. In this case, S103 may include: The first network device receives the BGP SR policy packet sent by the control entity, where the BGP SR policy packet includes the SR policy. A manner in which the BGP SR policy packet carries the first indication information may include but is not limited to a flag bit in a segment list sub-type-length-value (Segment List Sub-TLV); a flag bit in a segment routing policy tunnel attribute (SR Policy Tunnel Attribute); or a flag bit in a segment sub-type-length-value segment sub-TLV in a segment routing policy segment list (SR Policy Segment List). For example, a flag bit is added to a segment list sub-TLV to carry the first indication information. As shown in FIG. 5, the flag bit is added to Flags (Flags) and is denoted as (To Endpoint, TE). When TE=1, it identifies that the segment list points to the endpoint of the SR policy; or when TE is not set or TE=0, it identifies that the segment list does not point to the endpoint of the SR policy. Alternatively, the flag bit is added and is denoted as (Not To Endpoint, NTE). When NTE is not set or NTE=0, it identifies that the segment list points to the endpoint of the SR policy; or when NTE=1, it identifies that the segment list does not point to the endpoint of the SR policy. The segment list sub-TLV may further include a type field=128 indicating a type of the sub-TLV; a length field whose value indicating a sum of lengths of all sub-TLVs in the segment list sub-TLV; flags, as a reserved field in draft-ietf-idr-segment-routing-te-policy and used as an occupant part of an indication mark of the segment list sub-TLV, where TE or NTE may be carried in any bit in flags; and several sub-TLVs (sub-TLVs).

In some other implementations, S102 may include: The control entity sends a path computation element protocol (Path Calculation Element Protocol, PCEP) packet to the first network device, where the PCEP packet includes the SR policy. In this case, S103 may include: The first network device receives the PCEP packet sent by the control entity, where the PCEP packet includes the SR policy. A manner in which the PCEP packet carries the first indication information may include but is not limited to a flag bit in a path attributes object (Path Attributes Object). The path attributes object describes attribute information in the segment list. For a format and a definition of each part of the path attributes object, refer to draft-ietf-pce-multipath. For example, a flag bit is added to a path attributes object to carry the first indication information. As shown in FIG. 6, the flag bit is added to Flags and is denoted as TE. When TE=1, it identifies that the segment list points to the endpoint of the SR policy; or when TE is not set or TE=0, it identifies that the segment list does not point to the endpoint of the SR policy. Alternatively, the flag bit is added and is denoted as NTE. When NTE is not set or NTE=0, it identifies that the segment list points to the endpoint of the SR policy; or when NTE=1, it identifies that the segment list does not point to the endpoint of the SR policy. The path attributes object may further include a path ID field and optional TLVs (Option TLVs), where a value of the path ID field is a path identifier of the segment list.

It may be understood that after obtaining the SR policy, the first network device establishes an SR path based on the segment list in the SR policy. After the SR path is established, the first network device may further report, to the control entity when reporting a status by using a BGP link state (Link State, LS) packet, second indication information indicating whether the SR path points to the endpoint of the SR policy. The second indication information may be indication information that is associated with the first indication information and carried in the BGP LS packet and indicates whether the segment list points to the endpoint of the SR policy. For example, the second indication information may be carried in the BGP LS packet by using a flag bit extended by 1 bit in an SR segment list TLV. For a format of the BGP LS packet and a manner of carrying the second indication information, refer to the current protocol draft-ietf-idr-te-lsp-distribution about the BGP LS packet reporting SR policy related information. As shown in FIG. 7, a flag bit is added to Flags in an SR segment list TLV in the BGP LS packet and is denoted as TE. When TE=1, it identifies that the segment list points to the endpoint of the SR policy; or when TE is not set or TE=0, it identifies that the segment list does not point to the endpoint of the SR policy. Alternatively, the flag bit is added and is denoted as NTE. When NTE is not set or NTE=0, it identifies that the segment list points to the endpoint of the SR policy; or when NTE=1, it identifies that the segment list does not point to the endpoint of the SR policy. The SR segment list TLV may further include a type field=1205 indicating that a type of the TLV is an SR segment list TLV; a length field indicating a length of the SR segment list TLV; flags including TE or NTE, where other flag bits may be extended according to an actual requirement to indicate other content; a multi-topology identifier (mixed topology identifier, MTID) field identifying a topology; an algorithm (Algorithm) field identifying an algorithm; a weight field; and a reserved (Reserved) field and sub-TLVs.

In S101 to S103, the first network device obtains the SR policy including the first indication information, so that the first network device can determine, based on the first indication information, whether the segment list in the SR policy points to the endpoint of the SR policy. This provides a basis for the first network device to perform a processing process like encapsulating the received service packet that needs to be encapsulated according to the SR policy, and makes it possible to perform more appropriate encapsulation on the service packet.

S104: The first network device receives a first service packet.

S105: In response to determining that a destination address of the first service packet matches the segment routing policy SR policy, the first network device determines, based on the first indication information in the SR policy, whether the first segment list in the SR policy points to the endpoint of the SR policy, where the SR policy includes the endpoint information, and the endpoint information indicates the endpoint.

In a possible implementation, that the first network device determines that a destination address of the first service packet matches the SR policy in S105 may include: After receiving the first service packet, the first network device parses the first service packet to obtain the destination address of the first service packet, matches forwarding information according to the destination address of the first service packet, and determines that the first service packet needs to be processed according to the SR policy, where the forwarding information includes but is not limited to the SR policy.

In an example, that the first network device matches forwarding information according to the destination address of the first service packet may include: The first network device queries the forwarding information, and determines the forwarding information that matches the destination address of the first service packet, where the forwarding information indicates that a next hop of the first service packet is an SR policy tunnel, and the SR policy needs to be encapsulated. That the first network device determines the forwarding information that matches the destination address of the first service packet may include: For example, the first network device uses the destination address of the first service packet as an endpoint, and determines the matched SR policy based on an endpoint and a color carried in the first service packet, where the SR policy includes a color and an endpoint. Therefore, the first network device determines that the destination address of the first service packet matches the SR policy, where the first service packet needs to be processed according to the SR policy.

In another example, that the first network device matches forwarding information according to the destination address of the first service packet may further include: In addition to that the first network device determines the SR policy that matches the destination address of the first service packet, the first network device determines a service SID that matches the destination address of the first service packet, where the forwarding information that carries a correspondence between the destination address of the first service packet and the service SID and forwarding information that carries a correspondence between the destination address and the SR policy may be reflected in one forwarding table, or may be reflected in two independent forwarding tables.

The SR policy on the first network device may include the first indication information. The first network device may determine, based on a value of the first indication information, whether the first segment list points to the endpoint of the SR policy. If the value of the first indication information obtained by the first network device is the first value, the first network device determines that the first segment list points to the endpoint of the SR policy. Otherwise, if the value of the first indication information obtained by the first network device is the second value, the first network device determines that the first segment list does not point to the endpoint of the SR policy. Whether the first segment list points to the endpoint of the SR policy may be, for example, whether a last SID in the first segment list points to the endpoint of the SR policy.

S106: The first network device encapsulates the first service packet based on a result of whether the first segment list points to the endpoint of the SR policy, to obtain a second service packet.

In an example, if the first network device determines that the first segment list points to the endpoint of the SR policy, the first network device may encapsulate the first service packet in a first encapsulation manner to obtain the second service packet. The first encapsulation manner is an encapsulation manner that is configured on the first network device and that is implemented when the first segment list points to the endpoint of the SR policy.

Compression encapsulation is used as an example. A process in which the first network device encapsulates the first service packet, to obtain a second service packet in S106 may include: S106a1: The first network device compresses the first segment list to obtain a compressed list and a network segment address, where the compressed list includes a plurality of compressed SIDs. S106a2: The first network device obtains a second segment list, where the second segment list includes the compressed list and function information in a service SID, the service SID indicates a service stream to the endpoint, and the service SID further includes the network segment address. S106a3: The first network device encapsulates the network segment address and the second segment list in the first service packet, to obtain the second service packet. The encapsulation process may be understood as an example of the first encapsulation manner in a compression encapsulation scenario. S106a1 to S106a3 may correspond to the embodiment shown in FIG. 2a. For a specific implementation and technical effect, refer to FIG. 2a.

In another example, if the first network device determines that the first segment list does not point to the endpoint of the SR policy, the first network device may encapsulate the first service packet in a second encapsulation manner to obtain the second service packet. The second encapsulation manner is an encapsulation manner that is configured on the first network device and that is implemented when the first segment list points to the endpoint of the SR policy, and the second encapsulation manner is different from the first encapsulation manner.

Compression encapsulation is used as an example. A process in which the first network device encapsulates the first service packet, to obtain a second service packet in S106 may include: S106b1: The first network device compresses the first segment list to obtain a compressed list and a network segment address, where the compressed list includes a plurality of compressed SIDs. S106b2: The first network device obtains a second segment list, where the second segment list includes the compressed list and node information and function information in a service SID, the service SID indicates a service stream to the endpoint, and the service SID further includes the network segment address. S106b3: The first network device encapsulates the network segment address and the second segment list in the first service packet, to obtain the second service packet. The encapsulation process may be understood as an example of the second encapsulation manner in the compression encapsulation scenario. S106b1 to S106b3 may correspond to the embodiment shown in FIG. 2b. For a specific implementation and technical effect, refer to FIG. 2b.

It should be noted that, in this example, because the first segment list does not point to the endpoint of the SR policy, related information of the routable service SID needs to be encapsulated in the second service packet, so that after the second service packet reaches a node indicated by the last SID in the first segment list, the second service packet can be forwarded to the endpoint of the SR policy. Therefore, before S106 is performed, the method 100 may further include: The first network device determines, based on the destination address of the first service packet, whether there is the forwarding information to the endpoint. The forwarding information includes but is not limited to the correspondence between the destination address and the service SID. An execution condition of S106b1 to S106b3 not only includes that the first segment list does not point to the endpoint of the SR policy, but also includes that the first network has the forwarding information to the endpoint. If the first network device determines that there is no forwarding information to the endpoint, even if the first network device encapsulates the first service packet to obtain the second service packet, the second service packet can be transmitted only to the node indicated by the last SID in the first segment list according to the SR path, and cannot be transmitted to the endpoint of the SR policy, and cannot be transmitted to the destination node of the first service packet. Therefore, the first network device prevents the first service packet from being encapsulated according to the SR policy, and determines that the SR policy is unavailable for the first service packet.

The forwarding information, to the endpoint, on the first network device may be forwarding information obtained by the first network device according to a private network route after the service SID of the endpoint is dynamically or statically configured to the endpoint and advertised to the first network device according to the private network route.

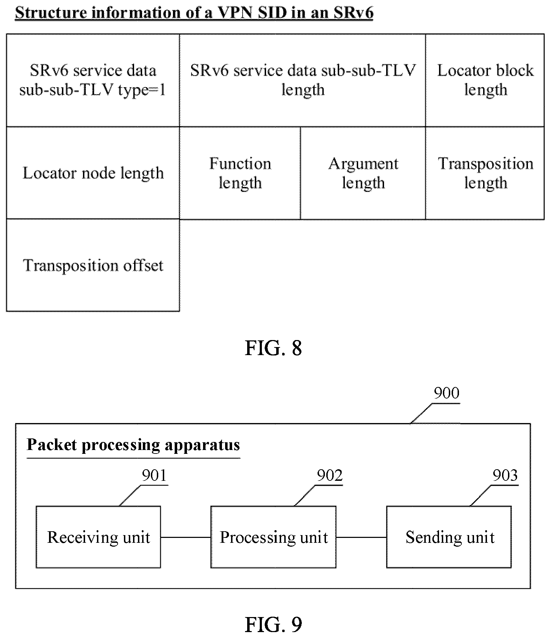

In some implementations, the forwarding information, to the endpoint, on the first network device may further include structure information of the service SID, used to indicate a specific structure of the service SID. In this case, the node information and the function information in the service SID in S106b2 may be obtained by the first network device from the service SID based on the structure information of the service SID in the forwarding information. For example, the service SID is a VPN SID in an SRv6. The structure information of the service SID may be shown in FIG. 8, and includes an SRv6 service data sub-sub-TLV type (SRv6 Service Data Sub-Sub-TLV Type) field=1, indicating that a type of the TLV is an SRv6 service data sub-sub-TLV; an SRv6 service data sub-sub-TLV length (SRv6 Service Data Sub-Sub-TLV Length) field indicating a length of the TLV; a locator block length field indicating a length of a block of a locator, and being in a unit of a bit; a locator node length field indicating that a length of a node of a locator, and being in a unit of a bit; a function length field indicating a length of a function, and being in a unit of a bit; an argument length field indicating a length of an argument, and being in a unit of a bit; a transposition length (Transposition Length) field indicating a length of a label (label) converted from the SID, and being in a unit of a bit; and a transposition offset (Transposition Offset) field indicating an offset location of the label converted from the SID, and being in a unit of a bit.

In embodiments of this application, the service SID may be a VPN SID or a service chain SID, or may be another SID identifying a service.

In S106a3 and S106b3, the second service packet may carry the second segment list in an extended SRH; or the second service packet may carry the second segment list in an IPv6 header, for example, may carry the second segment list in a destination address field in the IPv6 header in the second service packet.

S107: The first network device forwards the second service packet according to the SR path determined based on the first segment list.

In some possible implementations, the first network device forwards the second service packet along the SR path based on the second segment list in the second service packet. If the SR path matches the forwarding path of the service packet, the endpoint of the SR policy can receive the second service packet. If the SR path does not match the forwarding path of the service packet, after receiving the second service packet, the node indicated by the last SID in the first segment list can obtain the service SID from the second segment list, query the forwarding information based on the service SID, process the second service packet based on the forwarding information, and forward a processed second service packet to the endpoint of the SR policy according to a service path indicated by the service SID. The forwarding path, to the endpoint of the SR policy, on the first network device may be a result of splicing the SR path and the service path.

In some other implementations, in an SR policy cross-AS domain scenario, if the last SID in the first segment list indicates an ASBR, it may be understood that the SR path matches the forwarding path of the service packet. However, after the service packet reaches the ASBR (namely, the endpoint of the SR policy) indicated by the last SID in the first segment list, the service packet further needs to be forwarded to the destination node of the service packet by querying the forwarding information based on the service SID. In this case, the forwarding path of the service packet may include a first forwarding path from the first network device to the endpoint of the SR policy and a second forwarding path from the endpoint of the SR policy to the destination node of the service packet.

It should be noted that S101 and S102 may be separately implemented as a packet processing method, and S104 to S107 may be separately implemented as a packet processing method.

In this way, in the method 100, the first indication information indicating whether the first segment list points to the endpoint of the SR policy is added to the SR policy, so that a headend of the SR policy can sense, based on the first indication information, whether the first segment list points to the endpoint of the SR policy. Therefore, the service packet is pertinently and appropriately processed and forwarded based on the result indicated by the first indication information. Regardless of whether the SR path determined based on the first segment list in the SR policy matches the forwarding path of the service packet, this can ensure that the service packet is effectively forwarded to the endpoint of the SR policy, and improve a forwarding success rate of the service packet.

Correspondingly, an embodiment of this application further provides a packet processing apparatus 900. The apparatus 900 is used in a first network device, as shown in FIG. 9. The apparatus 900 may include a receiving unit 901, a processing unit 902, and a sending unit 903. The receiving unit 901 is configured to receive a first service packet.

The receiving unit 901 may perform S104 shown in FIG. 4.

The processing unit 902 is configured to: in response to determining that a destination address of the first service packet matches a segment routing policy SR policy, determine, based on first indication information in the SR policy, whether a first segment list points to an endpoint of the SR policy, where the SR policy includes endpoint information, and the endpoint information indicates the endpoint. The processing unit 902 may perform S105 shown in FIG. 4.

The processing unit 902 is further configured to encapsulate the first service packet based on a result of whether the first segment list points to the endpoint of the SR policy, to obtain a second service packet. The processing unit 902 may perform S106 shown in FIG. 4.

The sending unit 903 is configured to forward the second service packet according to an SR path determined based on the first segment list. The sending unit 903 may perform S107 shown in FIG. 4.

In some implementations, that the result indicates that the first segment list points to the endpoint of the SR policy includes: A last segment identifier SID in the first segment list points to the endpoint. That a last first SID in the first segment list points to the endpoint includes: The last SID in the first segment list is a first endpoint SID, and the first endpoint SID indicates the endpoint; or the last SID in the first segment list is a second endpoint SID, and the second endpoint SID indicates an outbound interface that is on a previous-hop node of the endpoint and that points to the endpoint.

In an example, the processing unit 902 is specifically configured to: compress the first segment list to obtain a compressed list and a network segment address, where the compressed list includes a plurality of compressed SIDs; obtain a second segment list, where the second segment list includes the compressed list and function information in a service SID, the service SID indicates a service stream to the endpoint, and the service SID further includes the network segment address; and encapsulate the network segment address and the second segment list in the first service packet, to obtain the second service packet.

In some other implementations, that the result indicates that the first segment list does not point to the endpoint of the SR policy includes: A last segment identifier SID in the first segment list does not point to the endpoint.

In this implementation, the processing unit 902 is further configured to: before encapsulating the first service packet to obtain the second service packet, determine, based on the destination address of the first service packet, whether there is forwarding information to the endpoint.

In an example, the processing unit 902 is specifically configured to: if there is the forwarding information to the endpoint, compress the first segment list to obtain a compressed list and a network segment address, where the compressed list includes a plurality of compressed SIDs; obtain a second segment list, where the second segment list includes the compressed list and node information and function information in a service SID, the service SID indicates a service stream to the endpoint, and the service SID further includes the network segment address; and encapsulate the network segment address and the second segment list in the first service packet, to obtain the second service packet.

The forwarding information to the endpoint includes structure information of the service SID, the structure information indicates a structure of the service SID, and the processing unit 902 is further configured to: obtain the node information and the function information in the service SID from the service SID based on the structure information.

In another example, the processing unit 902 is further configured to: if there is no forwarding information to the endpoint, prevent the first service packet from being encapsulated according to the SR policy.

The service SID is a virtual private network VPN SID or a service chain SID of the endpoint.

The second service packet carries the second segment list in a segment routing header; or the second service packet carries the second segment list in an internet protocol version 6 IPv6 header.

In some implementations, the receiving unit 901 is further configured to: receive the SR policy sent by a control entity. The receiving unit 901 may perform S103 shown in FIG. 4.

In an example, the receiving unit 901 is specifically configured to: receive a border gateway protocol BGP SR policy packet sent by the control entity, where the BGP SR policy packet includes the SR policy.

A manner in which the BGP SR policy packet carries the first indication information includes: a flag bit in a segment list sub-type-length-value Segment List Sub-TLV; a flag bit in a segment routing policy tunnel attribute SR Policy Tunnel Attribute; or a flag bit in a segment sub-type-length-value Segment Sub-TLV in a segment routing policy segment list SR Policy Segment List.

In another example, the receiving unit 901 is specifically configured to: receive a path computation element protocol PCEP packet sent by the control entity, where the PCEP packet includes the SR policy.

A manner in which the PCEP packet carries the first indication information includes: a flag bit in a path attributes object Path Attributes Object.

In embodiments of this application, the SR policy is a segment routing on internet protocol version 6 policy SRv6 policy, and a SID in the first segment list is an IPv6 address; or the SR policy is a segment routing on multi-protocol label switching policy SR MPLS policy, and a SID in the first segment list is an MPLS label.

It should be noted that for a specific implementation and achieved technical effect of the apparatus 900 provided in this application, refer to the related descriptions of operations performed by the first network device in the method 100.

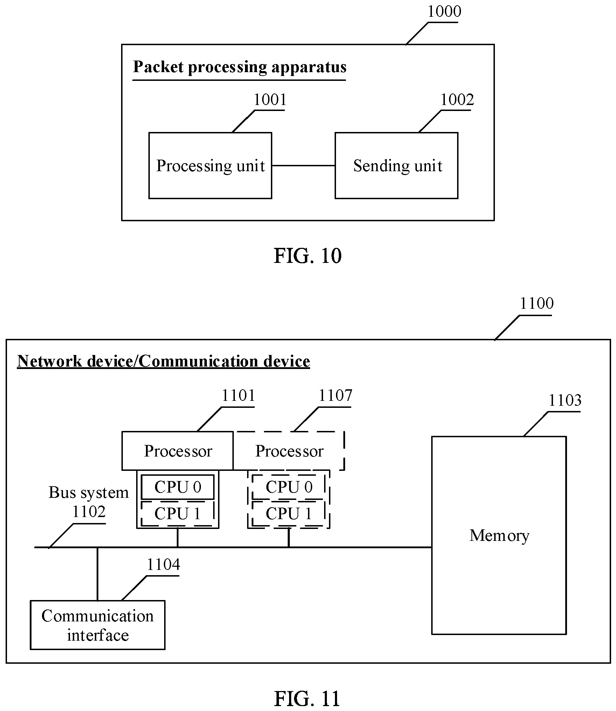

Correspondingly, an embodiment of this application further provides a packet processing apparatus 1000. The apparatus 1000 is used in a control entity, as shown in FIG. 10. The apparatus 1000 may include a processing unit 1001 and a sending unit 1002. The processing unit 1001 is configured to generate a segment routing policy SR policy, where the SR policy includes a segment list and indication information, the indication information indicates whether the segment list points to an endpoint of the SR policy, the SR policy further includes endpoint information, and the endpoint information indicates the endpoint.

The processing unit 1001 may perform S101 shown in FIG. 4.

The sending unit 1002 is configured to send the SR policy to a headend of the SR policy. The sending unit 1002 may perform S102 shown in FIG. 4.

In some implementations, that the indication information indicates whether the segment list points to the endpoint of the SR policy includes: The indication information indicates whether a last segment identifier SID in the segment list points to the endpoint.

In some implementations, the sending unit 1002 is specifically configured to: send a border gateway protocol BGP SR policy packet to the headend, where the BGP SR policy packet includes the SR policy.

In some other implementations, the sending unit 1002 is specifically configured to: send a path computation element protocol PCEP packet to the headend, where the PCEP packet includes the SR policy.

It should be noted that for a specific implementation and achieved technical effect of the apparatus 1000 provided in this application, refer to the descriptions of related operations of the control entity in the method 100.

Refer to FIG. 11. An embodiment of this application provides a network device 1100 (which may also be referred to as a communication device 1100). The network device 1100 may be the network device in any one of the foregoing embodiments, for example, may be the network device 21 in FIG. 1, or for another example, may be the first network device in the method 100. The network device 1100 may implement functions of various network devices in the foregoing embodiments. Alternatively, the network device 1100 may be the control entity in any one of the foregoing embodiments, for example, may be the control entity 51 in FIG. 1; or for another example, may be the control entity in the method 100. The network device 1100 may implement functions of the control entities in the foregoing embodiments. The network device 1100 includes at least one processor 1101, a bus system 1102, a memory 1103, and at least one communication interface 1104.

The network device 1100 is an apparatus of a hardware structure, and may be configured to implement function modules in the packet processing apparatus 900 shown in FIG. 9. For example, a person skilled in the art may figure out that the processing unit 902 in the packet processing apparatus 900 shown in FIG. 9 may be implemented by using the at least one processor 1101 by invoking code in the memory 1103. Alternatively, the network device 1100 is an apparatus of a hardware structure, and may be configured to implement function modules in the packet processing apparatus 1000 shown in FIG. 10. For example, a person skilled in the art may figure out that the processing unit 1001 in the packet processing apparatus 1000 shown in FIG. 10 may be implemented by using the at least one processor 1101 by invoking code in the memory 1103.

Optionally, the network device 1100 may be configured to implement a function of the network device in any one of the foregoing embodiments.

Optionally, the processor 1101 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of the solutions in this application.

The bus system 1102 may include a channel for transmitting information between the foregoing components.

The communication interface 1104 is configured to communicate with another device or a communication network.

The memory 1103 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. This is not limited thereto. The memory may exist independently, and is connected to the processor through the bus. The memory may alternatively be integrated with the processor.

The memory 1103 is configured to store application program code for performing the solutions of this application, and the processor 1101 controls execution of the application program code. The processor 1101 is configured to execute the application program code stored in the memory 1103, so as to implement functions in the method in this application.

During specific implementation, in an embodiment, the processor 1101 may include one or more CPUs such as a CPU 0 and a CPU 1 in FIG. 11.

During specific implementation, in an embodiment, the network device 1100 may include a plurality of processors, for example, the processor 1101 and a processor 1107 in FIG. 11. Each of the processors may be a single-core (single-CPU) processor, or may be a multi-core (multi-CPU) processor. The processor herein may be one or more devices, circuits, and/or processing cores configured to process data (for example, computer program instructions).

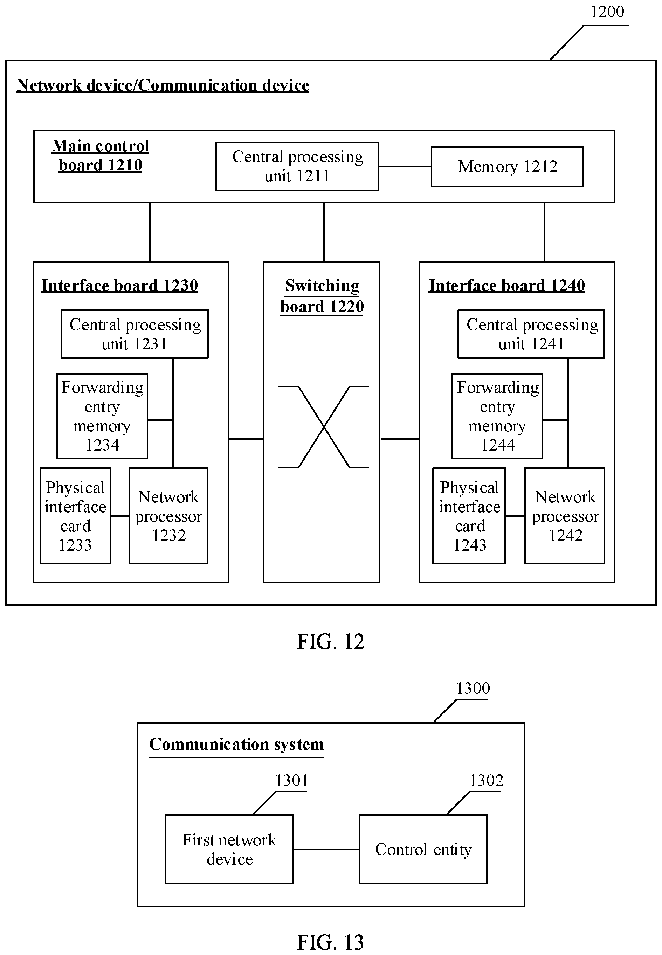

FIG. 12 is a diagram of a structure of another network device 1200 (which may also be referred to as a communication device 1200) according to an embodiment of this application. The network device 1200 may be the first network device or the control entity in any one of the foregoing embodiments, and may be the network device 21 or the control entity 51 in FIG. 1. For another example, the network device 1200 may be the first network device or the control entity in the method 100. The network device 1200 may implement functions of various network devices or control entities in the foregoing embodiments.

The network device 1200 includes a main control board 1210 and an interface board 1230.

The main control board 1210 is also referred to as a main processing unit (main processing unit, MPU) or a route processor card (route processor card). The main control board 1210 controls and manages components in the network device 1200, including route calculation, device management, device maintenance, and protocol processing functions. The main control board 1210 includes a central processing unit 1211 and a memory 1212.

The interface board 1230 is also referred to as a line processing unit (line processing unit, LPU), a line card (line card), or a service board. The interface board 1230 is configured to provide various service interfaces, and forward a data packet. The service interface includes but is not limited to an Ethernet interface, a POS (Packet over SONET/SDH) interface, and the like. The Ethernet interface is, for example, a flexible Ethernet service interface (Flexible Ethernet Client, FlexE Client). The interface board 1230 includes a central processing unit 1231, a network processor 1232, a forwarding entry memory 1234, and a physical interface card (physical interface card, PIC) 1233.

The central processing unit 1231 on the interface board 1230 is configured to control and manage the interface board 1230, and communicate with the central processing unit 1211 on the main control board 1210.

The network processor 1232 is configured to implement packet forwarding processing. A form of the network processor 1232 may be a forwarding chip. Specifically, processing on an uplink packet includes processing at a packet ingress interface, and forwarding table lookup, and processing on a downlink packet includes forwarding table lookup, and the like.

The physical interface card 1233 is configured to implement an interconnection function at a physical layer. Original traffic enters the interface board 1230 from the physical interface card, and a processed packet is sent from the physical interface card 1233. The physical interface card 1233 includes at least one physical interface. The physical interface is also referred to as a physical port. The physical interface card 1233 corresponds to a FlexE physical interface in a system architecture. The physical interface card 1233, also referred to as a subcard, may be installed on the interface board 1230, and is responsible for converting an optical/electrical signal into a packet, performing validity check on the packet, and forwarding the packet to the network processor 1232 for processing. In some embodiments, the central processing unit 1231 on the interface board 1230 may also perform a function of the network processor 1232, for example, implement software forwarding based on a general-purpose CPU. In this case, the network processor 1232 is not required in the physical interface card 1233.

Optionally, the network device 1200 includes a plurality of interface boards. For example, the network device 1200 further includes an interface board 1240. The interface board 1240 includes a central processing unit 1241, a network processor 1242, a forwarding entry memory 1244, and a physical interface card 1243.

Optionally, the network device 1200 further includes a switching board 1220. The switching board 1220 may also be referred to as a switch fabric unit (switch fabric unit, SFU). When the network device has the plurality of interface boards 1230, the switching board 1220 is configured to complete data exchange between the interface boards. For example, the interface board 1230 and the interface board 1240 may communicate with each other by using the switching board 1220.

The main control board 1210 and the interface board 1230 are coupled. For example, the main control board 1210, the interface board 1230 and the interface board 1240, and the switching board 1220 are connected to a system backplane through a system bus to implement interworking. In a possible implementation, an inter-process communication (inter-process communication, IPC) channel is established between the main control board 1210 and the interface board 1230, and the main control board 1210 and the interface board 1230 communicate with each other through the IPC channel.

Logically, the network device 1200 includes a control plane and a forwarding plane. The control plane includes the main control board 1210 and the central processing unit 1231. The forwarding plane includes components for forwarding, for example, the forwarding entry memory 1234, the physical interface card 1233, and the network processor 1232. The control plane performs functions such as a function of a router, generating a forwarding table, processing signaling and protocol packets, and configuring and maintaining a status of a device. The control plane delivers the generated forwarding table to the forwarding plane. On the forwarding plane, the network processor 1232 searches the forwarding table delivered by the control plane to forward a packet received by the physical interface card 1233. The forwarding table delivered by the control plane may be stored in the forwarding entry memory 1234. In some embodiments, the control plane and the forwarding plane may be totally separated, and are not on a same device.

If the network device 1200 is configured as a first network device, the network processor 1232 may trigger the physical interface card 1233 to receive a first service packet. In response to determining that a destination address of the first service packet matches a segment routing policy SR policy, the central processing unit 1211 may determine, based on first indication information in the SR policy, whether a first segment list points to an endpoint of the SR policy, where the SR policy includes endpoint information, and the endpoint information indicates the endpoint. The central processing unit 1211 may further encapsulate the first service packet based on a result of whether the first segment list points to the endpoint of the SR policy, to obtain a second service packet. The network processor 1232 may further trigger the physical interface card 1233 to forward the second service packet according to an SR path determined based on the first segment list.

It should be understood that the receiving unit 901 or the sending unit 903 in the packet processing apparatus 900 may be equivalent to the physical interface card 1233 or the physical interface card 1243 in the network device 1200, and the processing unit 902 in the packet processing apparatus 900 may be equivalent to the central processing unit 1211 or the central processing unit 1231 in the network device 1200.

It should be understood that an operation on the interface board 1240 is consistent with an operation on the interface board 1230 in this embodiment of this application. For brevity, details are not described again. It should be understood that the network device 1200 in this embodiment may correspond to the packet processing apparatus 900 in the foregoing embodiments. The main control board 1210, the interface board 1230, and/or the interface board 1240 in the network device 1200 may implement functions and/or various steps implemented in the packet processing apparatus 900 in the foregoing embodiments. For brevity, details are not described herein again.

If the network device 1200 is configured as a control entity, the central processing unit 1211 may generate a segment routing policy SR policy, where the SR policy includes a segment list and indication information, the indication information indicates whether the segment list points to an endpoint of the SR policy, the SR policy further includes endpoint information, and the endpoint information indicates the endpoint. The network processor 1232 may trigger the physical interface card 1233 to send the SR policy to a headend of the SR policy.

It should be understood that the sending unit 1002 in the packet processing apparatus 1000 and the communication interface 1104 in the network device 1100 may be equivalent to the physical interface card 1233 or the physical interface card 1243 in the network device 1200; and the processing unit 1001 in the packet processing apparatus 1000 and the processor 1101 in the network device 1100 may be equivalent to the central processing unit 1211 or the central processing unit 1231 in the network device 1200.

It should be understood that an operation on the interface board 1240 is consistent with an operation on the interface board 1230 in this embodiment of this application. For brevity, details are not described again. It should be understood that the network device 1200 in this embodiment may correspond to the packet processing apparatus 1000 in the foregoing embodiments. The main control board 1210, the interface board 1230, and/or the interface board 1240 in the network device 1200 may implement functions and/or various steps implemented in the packet processing apparatus 1000 or the network device 1100 in the foregoing embodiments. For brevity, details are not described herein again.

It may be understood that, there may be one or more main control boards. When there are a plurality of main control boards, the main control boards may include an active main control board and a standby main control board. There may be one or more interface boards. A network device with a stronger data processing capability provides a larger number of interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need a switching board, and the interface board provides a function of processing service data of an entire system. In a distributed forwarding architecture, the network device may have at least one switching board, and data exchange between a plurality of interface boards is implemented by using the switching board, to provide a large-capacity data exchange and processing capability. Therefore, a data access and processing capability of the network device in the distributed architecture is greater than that of the device in the centralized architecture. Optionally, the network device may alternatively be in a form in which there is only one card. To be specific, there is no switching board, and functions of the interface board and the main control board are integrated on the card. In this case, a central processing unit on the interface board and a central processing unit on the main control board may be combined to form one central processing unit on the card, to perform functions obtained after the two central processing units are combined. This form of device (for example, a network device like a low-end switch or a router) has a weak data exchange and processing capability. A specific architecture that is to be used depends on a specific networking deployment scenario.

In some possible embodiments, each of the foregoing network devices may be implemented as a virtualized device. For example, the virtualized device may be a virtual machine (English: Virtual Machine, VM) on which a program having a packet sending function is run, and the virtual machine is deployed on a hardware device (for example, a physical server). The virtual machine is a complete software-simulated computer system that has complete hardware system functions and that runs in an entirely isolated environment. The virtual machine may be configured as each network device in embodiments of this application. For example, each network device may be implemented based on a general-purpose physical server with reference to a network functions virtualization (Network Functions Virtualization, NFV) technology. Each network device is a virtual host, a virtual router, or a virtual switch. After reading this application, with reference to the NFV technology, a person skilled in the art may virtualize, on the general-purpose physical server, the network devices having the foregoing functions. Details are not described herein again.

It should be understood that the network devices in the foregoing product forms respectively have any functions of the network devices or communication devices in the foregoing method embodiments, and details are not described herein again.

An embodiment of this application further provides a chip, including a processor and an interface circuit. The interface circuit is configured to receive instructions and transmit the instructions to the processor. The processor may be, for example, a specific implementation form of the packet processing apparatus in embodiments of this application, and may be configured to perform the foregoing route selection method. The processor is coupled to a memory. The memory is configured to store a program or instructions. When the program or the instructions are executed by the processor, the chip system is enabled to implement the method in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system-on-a-chip (system-on-a-chip, SoC), a central processing unit (central processing unit, CPU), a network processor (network processor, NP), a digital signal processing circuit (digital signal processor, DSP), a micro controller (micro controller unit, MCU), a programmable logic device (programmable logic device, PLD), or another integrated chip.

In addition, an embodiment of this application further provides a communication system 1300. Refer to FIG. 13. The communication system 1300 may include a first network device 1301 and a control entity 1302. The first network device 1301 is configured to perform steps corresponding to the first network device in any possible implementation of the foregoing method 100. The control entity 1302 is configured to perform steps corresponding to the control entity in any possible implementation of the foregoing method 100.

In addition, an embodiment of this application further provides a computer-readable storage medium. The computer-readable storage medium stores program code or instructions. When the program code or the instructions are run on a computer, the computer is enabled to perform the method in any implementation of the embodiment shown in FIG. 4.

In addition, an embodiment of this application further provides a computer program product. When the computer program product runs on a computer, the computer is enabled to perform the method in any implementation of the method 100.

It should be understood that "determining B based on A" mentioned in embodiments of this application does not mean that B is determined based only on A, and B may be determined based on A and/or other information.

"First" in names such as "first service packet" mentioned in this application is merely used as a name identifier, and does not represent "first" in a sequence. Such a rule is also applicable to "second" and the like.

From the foregoing descriptions of the foregoing implementations, a person skilled in the art may clearly understand that some or all steps of the methods in embodiments may be implemented by software in addition to a universal hardware platform. Based on such an understanding, the technical solutions of this application may be implemented in a form of a software product. The computer software product may be stored in a storage medium, for example, a read-only memory (English: read-only memory, ROM)/RAM, a magnetic disk, or a compact disc, and includes several instructions for instructing a computer device (which may be a personal computer, a server, or a network communication device like a router) to perform the methods described in embodiments or some parts of embodiments of this application.

Embodiments in this specification are all described in a progressive manner, for same or similar parts in embodiments, refer to these embodiments, and each embodiment focuses on a difference from other embodiments. Especially, system embodiments and device embodiments are basically similar to method embodiments, and therefore are described briefly. For related parts, refer to partial description in the method embodiments. The described device and system embodiments are merely examples. The modules described as separate parts may or may not be physically separate, and parts displayed as modules may or may not be physical modules, may be located in one location, or may be distributed on a plurality of network units. Some or all the modules may be selected according to actual requirements to achieve the objectives of the solutions of embodiments. A person of ordinary skill in the art may understand and implement embodiments of the present invention without creative efforts.

The foregoing merely describes example implementations of this application, and is not intended to limit the protection scope of this application. It should be noted that a person of ordinary skill in the art may make improvements and polishing without departing from this application and such improvements and polishing shall fall within the protection scope of this application.

## Claims

1. A packet processing method, applied to a first network device, wherein the method comprises:
receiving a first service packet;
in response to determining that a destination address of the first service packet matches a segment routing policy SR policy, determining, based on first indication information in the SR policy, whether a first segment list in the SR policy points to an endpoint of the SR policy, wherein the SR policy comprises endpoint information, and the endpoint information indicates the endpoint;
encapsulating the first service packet based on a result of whether the first segment list points to the endpoint of the SR policy, to obtain a second service packet; and
forwarding the second service packet according to an SR path determined based on the first segment list.

2. The method according to claim 1, wherein that the result indicates that the first segment list points to the endpoint of the SR policy comprises: a last segment identifier SID in the first segment list points to the endpoint.

3. The method according to claim 2, wherein that a last first SID in the first segment list points to the endpoint comprises:
the last SID in the first segment list is a first endpoint SID, and the first endpoint SID indicates the endpoint; or
the last SID in the first segment list is a second endpoint SID, and the second endpoint SID indicates an outbound interface that is on a previous-hop node of the endpoint and that points to the endpoint.

4. The method according to claim 2 or 3, wherein the encapsulating the first service packet, to obtain a second service packet comprises:
compressing the first segment list to obtain a compressed list and a network segment address, wherein the compressed list comprises a plurality of compressed SIDs;
obtaining a second segment list, wherein the second segment list comprises the compressed list and function information in a service SID, the service SID indicates a service stream to the endpoint, and the service SID further comprises the network segment address; and
encapsulating the network segment address and the second segment list in the first service packet, to obtain the second service packet.

5. The method according to claim 1, wherein that the result indicates that the first segment list does not point to the endpoint of the SR policy comprises: a last segment identifier SID in the first segment list does not point to the endpoint.

6. The method according to claim 5, wherein before the encapsulating the first service packet, to obtain a second service packet, the method further comprises:
determining, based on the destination address of the first service packet, whether there is forwarding information to the endpoint.

7. The method according to claim 6, wherein the encapsulating the first service packet, to obtain a second service packet comprises:
if there is the forwarding information to the endpoint, compressing the first segment list to obtain a compressed list and a network segment address, wherein the compressed list comprises a plurality of compressed SIDs;
obtaining a second segment list, wherein the second segment list comprises the compressed list and node information and function information in a service SID, the service SID indicates a service stream to the endpoint, and the service SID further comprises the network segment address; and
encapsulating the network segment address and the second segment list in the first service packet, to obtain the second service packet.

8. The method according to claim 6 or 7, wherein the forwarding information to the endpoint comprises structure information of the service SID, the structure information indicates a structure of the service SID, and the method further comprises:
obtaining the node information and the function information in the service SID from the service SID based on the structure information.

9. The method according to claim 6, wherein the method further comprises:
if there is no forwarding information to the endpoint, preventing the first service packet from being encapsulated according to the SR policy.

10. The method according to claim 4, or any one of claims 7 to 9, wherein the service SID is a virtual private network VPN SID or a service chain SID of the endpoint.

11. The method according to claim 4, or any one of claims 7 to 10, wherein the second service packet carries the second segment list in a segment routing header; or the second service packet carries the second segment list in an internet protocol version 6 IPv6 header.

12. The method according to any one of claims 1 to 11, wherein the method further comprises:
receiving the SR policy sent by a control entity.

13. The method according to claim 12, wherein the receiving the SR policy sent by a control entity comprises:
receiving a border gateway protocol BGP SR policy packet sent by the control entity, wherein the BGP SR policy packet comprises the SR policy.

14. The method according to claim 13, wherein a manner in which the BGP SR policy packet carries the first indication information comprises:
a flag bit in a segment list sub-type-length-value Segment List Sub-TLV;
a flag bit in a segment routing policy tunnel attribute SR Policy Tunnel Attribute; or
a flag bit in a segment sub-type-length-value Segment Sub-TLV in a segment routing policy segment list SR Policy Segment List.

15. The method according to claim 12, wherein the receiving the SR policy sent by a control entity comprises:
receiving a path computation element protocol PCEP packet sent by the control entity, wherein the PCEP packet comprises the SR policy.

16. The method according to claim 15, wherein a manner in which the PCEP packet carries the first indication information comprises:
a flag bit in a path attributes object Path Attributes Object.

17. The method according to any one of claims 12 to 16, wherein the method further comprises:
sending a BGP link state LS packet to the control entity, wherein the BGP LS packet comprises second indication information, and the second indication information is associated with the first indication information.

18. The method according to claim 17, wherein a manner in which the BGP LS packet carries the second indication information comprises:
a flag bit in a segment routing policy segment list type-length-value SR Segment List TLV.

19. The method according to any one of claims 1 to 18, wherein
the SR policy is a segment routing on internet protocol version 6 policy SRv6 policy, and a SID in the first segment list is an IPv6 address; or
the SR policy is a segment routing on multi-protocol label switching policy SR MPLS policy, and a SID in the first segment list is an MPLS label.

20. A packet processing method, applied to a control entity, wherein the method comprises:
generating a segment routing policy SR policy, wherein the SR policy comprises a segment list and indication information, the indication information indicates whether the segment list points to an endpoint of the SR policy, the SR policy further comprises endpoint information, and the endpoint information indicates the endpoint; and
sending the SR policy to a first network device, wherein the first network device is a headend of the SR policy.

21. The method according to claim 20, wherein that the indication information indicates whether the segment list points to an endpoint of the SR policy comprises: the indication information indicates whether a last segment identifier SID in the segment list points to the endpoint.

22. The method according to claim 20 or 21, wherein the sending the SR policy to a headend of the SR policy comprises:
sending a border gateway protocol BGP SR policy packet to the headend, wherein the BGP SR policy packet comprises the SR policy.

23. The method according to claim 20 or 21, wherein the sending the SR policy to a headend of the SR policy comprises:
sending a path computation element protocol PCEP packet to the headend, wherein the PCEP packet comprises the SR policy.

24. A packet processing apparatus, used in a first network device and comprising:
a receiving unit, configured to receive a first service packet;
a processing unit, configured to: in response to determining that a destination address of the first service packet matches a segment routing policy SR policy, determine, based on first indication information in the SR policy, whether a first segment list points to an endpoint of the SR policy, wherein the SR policy comprises endpoint information, and the endpoint information indicates the endpoint, wherein
the processing unit is further configured to encapsulate the first service packet based on a result of whether the first segment list points to the endpoint of the SR policy, to obtain a second service packet; and
a sending unit, configured to forward the second service packet according to an SR path determined based on the first segment list.

25. The apparatus according to claim 24, wherein that the result indicates that the first segment list points to the endpoint of the SR policy comprises: a last segment identifier SID in the first segment list points to the endpoint.

26. The apparatus according to claim 25, wherein that a last first SID in the first segment list points to the endpoint comprises:
the last SID in the first segment list is a first endpoint SID, and the first endpoint SID indicates the endpoint; or
the last SID in the first segment list is a second endpoint SID, and the second endpoint SID indicates an outbound interface that is on a previous-hop node of the endpoint and that points to the endpoint.

27. The apparatus according to claim 25 or 26, wherein the processing unit is specifically configured to:
compress the first segment list to obtain a compressed list and a network segment address, wherein the compressed list comprises a plurality of compressed SIDs;
obtain a second segment list, wherein the second segment list comprises the compressed list and function information in a service SID, the service SID indicates a service stream to the endpoint, and the service SID further comprises the network segment address; and
encapsulate the network segment address and the second segment list in the first service packet, to obtain the second service packet.

28. The apparatus according to claim 24, wherein that the result indicates that the first segment list does not point to the endpoint of the SR policy comprises: a last segment identifier SID in the first segment list does not point to the endpoint.

29. The apparatus according to claim 28, wherein the processing unit is further configured to:
before encapsulating the first service packet, to obtain the second service packet, determine, based on the destination address of the first service packet, whether there is forwarding information to the endpoint.

30. The apparatus according to claim 29, wherein the processing unit is specifically configured to:
if there is the forwarding information to the endpoint, compress the first segment list to obtain a compressed list and a network segment address, wherein the compressed list comprises a plurality of compressed SIDs;
obtain a second segment list, wherein the second segment list comprises the compressed list and node information and function information in a service SID, the service SID indicates a service stream to the endpoint, and the service SID further comprises the network segment address; and
encapsulate the network segment address and the second segment list in the first service packet, to obtain the second service packet.

31. The apparatus according to claim 29 or 30, wherein the forwarding information to the endpoint comprises structure information of the service SID, the structure information indicates a structure of the service SID, and the processing unit is further configured to:
obtain the node information and the function information in the service SID from the service SID based on the structure information.

32. The apparatus according to claim 31, wherein the processing unit is further configured to:
if there is no forwarding information to the endpoint, prevent the first service packet from being encapsulated according to the SR policy.

33. The apparatus according to claim 27, or any one of claims 30 to 32, wherein the service SID is a virtual private network VPN SID or a service chain SID of the endpoint.

34. The apparatus according to claim 27, or any one of claims 30 to 33, wherein the second service packet carries the second segment list in a segment routing header; or the second service packet carries the second segment list in an internet protocol version 6 IPv6 header.

35. The apparatus according to any one of claims 24 to 34, wherein the receiving unit is further configured to:
receive the SR policy sent by a control entity.

36. The apparatus according to claim 35, wherein the receiving unit is specifically configured to:
receive a border gateway protocol BGP SR policy packet sent by the control entity, wherein the BGP SR policy packet comprises the SR policy.

37. The apparatus according to claim 35, wherein a manner in which the BGP SR policy packet carries the first indication information comprises:
a flag bit in a segment list sub-type-length-value Segment List Sub-TLV;
a flag bit in a segment routing policy tunnel attribute SR Policy Tunnel Attribute; or
a flag bit in a segment sub-type-length-value Segment Sub-TLV in a segment routing policy segment list SR Policy Segment List.

38. The apparatus according to claim 35, wherein the receiving unit is specifically configured to:
receive a path computation element protocol PCEP packet sent by the control entity, wherein the PCEP packet comprises the SR policy.

39. The apparatus according to claim 38, wherein a manner in which the PCEP packet carries the first indication information comprises:
a flag bit in a path attributes object Path Attributes Object.

40. The apparatus according to any one of claims 24 to 39, wherein
the SR policy is a segment routing on internet protocol version 6 policy SRv6 policy, and a SID in the first segment list is an IPv6 address; or
the SR policy is a segment routing on multi-protocol label switching policy SR MPLS policy, and a SID in the first segment list is an MPLS label.

41. A packet processing apparatus, used in a control entity, wherein the apparatus comprises:
a processing unit, configured to generate a segment routing policy SR policy, wherein the SR policy comprises a segment list and indication information, the indication information indicates whether the segment list points to an endpoint of the SR policy, the SR policy further comprises endpoint information, and the endpoint information indicates the endpoint; and
a sending unit, configured to send the SR policy to a headend of the SR policy.

42. The apparatus according to claim 41, wherein that the indication information indicates whether the segment list points to an endpoint of the SR policy comprises: the indication information indicates whether a last segment identifier SID in the segment list points to the endpoint.

43. The apparatus according to claim 41 or 42, wherein the sending unit is specifically configured to:
send a border gateway protocol BGP SR policy packet to the headend, wherein the BGP SR policy packet comprises the SR policy.

44. The apparatus according to claim 41 or 42, wherein the sending unit is specifically configured to:
send a path computation element protocol PCEP packet to the headend, wherein the PCEP packet comprises the SR policy.

45. A network device, wherein the network device comprises a memory and a processor;
the memory is configured to store instructions; and
the processor is configured to execute the instructions in the memory, to perform the method according to any one of claims 1 to 19.

46. A control entity, wherein the control entity comprises a memory and a processor;
the memory is configured to store instructions; and
the processor is configured to execute the instructions in the memory, to perform the method according to any one of claims 20 to 23.

47. A communication system, comprising a first network device and a control entity, wherein
the first network device is configured to perform the method according to any one of claims 1 to 19; and
the control entity is configured to perform the method according to any one of claims 20 to 23.

48. A computer-readable storage medium, comprising instructions, wherein when the instructions are run on a computer, the computer is enabled to perform the method according to any one of claims 1 to 23.
